# EUROPEAN PATENT SPECIFICATION

(11) **EP 4 162 668 B1**
(45) Date of publication and mention of the grant of the patent: **30.07.2025**
(21) Application number: 21817385.4
(22) Date of filing: 03.06.2021
(51) Int. Cl.: H04L 9/08, H04L 9/40, H04L 41/0803, H04L 43/12

(54) **A NETWORK MONITORING DEVICE, AND APPLICATIONS THEREOF**
NETZWERKÜBERWACHUNGSVORRICHTUNG UND ANWENDUNGEN DAVON
DISPOSITIF DE SURVEILLANCE DE RÉSEAU ET APPLICATIONS CORRESPONDANTES

(30) Priority: 03.06.2020 US 202016891871; 03.06.2020 US 202016891879; 03.06.2020 US 202016891883
(43) Date of publication of application: 12.04.2023
(73) Proprietor: Capital One Services, LLC, McLean, Virginia 22102 (US)
(72) Inventor: WATSON, John, McLean, Virginia 22102 (US); ROOSENRAAD, Christopher, McLean, Virginia 22102 (US); KOFIRA, Peter P., McLean, Virginia 22102 (US); SCHEPONIK, Travis, McLean, Virginia 22102 (US); EPPERT, Aaron, McLean, Virginia 22102 (US)
(74) Representative: Boult Wade Tennant LLP
(86) International application number: PCT/US2021/035746
(87) International publication number: WO 2021/247898

(56) References cited:
- US-A1- 2013 046 993
- US-A1- 2017 163 736
- US-A1- 2017 163 736
- US-A1- 2018 191 501
- US-A1- 2018 288 021
- US-A1- 2018 288 021
- US-A1- 2019 068 564
- US-A1- 2019 068 564

## Description

### FIELD

Embodiments generally relate to computer network traffic monitoring and analysis.

### BACKGROUND

A computer network, often referred to as a network, is an arrangement of interconnected computers in digital communication with each other. Computers in a network can share data, resources and computing power to accomplish useful tasks. Computers may send data to each other in discrete bundles of information called packets. The data sent between computers in a network may broadly be referred to as network traffic.

Networks may require some amount of management and maintenance to operate effectively. Network management systems may include devices that capture and copy packets sent between computers. The network management system may include terminal access points (TAPs) configured to capture and copy network traffic. In network management systems, network monitoring devices may receive network traffic collected using one or more TAPs. The network monitoring devices perform analysis on the received network traffic. This analysis may be useful for detecting network intrusions or detecting and resolving communications issues.

Some network management systems may include several different network monitoring devices with specific functions. A network packet broker (NPB) may be used to receive captured packets from one or more TAPs and distribute the captured packets to the appropriate network monitoring devices.

Network traffic may be encrypted, which may make it difficult for a network monitoring device to perform the analysis needed. To deal with this, network administrators may store decryption keys in a NPB. The NPB may use the decryption keys to decrypt some network traffic before distributing captured packets to the network monitoring devices. In extremely large networks with diverse traffic, network packet brokers may be incapable of storing all the keys necessary to decrypt network traffic for optimal performance of the network monitoring devices.

Systems and methods are needed to allow improved performance of the decryption of network traffic for analysis.

A computer network, often referred to as a network, is an arrangement of interconnected computers in digital communication with each other. Computers in a network can share data, resources and computing power to accomplish useful tasks. Computers may send data to each other in discrete bundles of information called packets. The data sent between computers in a network may be referred to as network traffic. An exchange of network packets between a source and destination may be called a data flow.

Networks may require some amount of management and maintenance to operate effectively. The field of computer network management may involve capturing network traffic and storing captured network traffic in a storage device. Network management tools may be used to analyze captured network traffic to discover and investigate network events related to a security breach or communication failure. The amount of storage required for storing captured network traffic depends on the network traffic flow rate and a retention policy. A retention policy dictates the amount of time that captured traffic should be stored. The amount of storage provisioned for packet capture storage may be determined based on expected traffic flow rate and the desired storage time for captured packets.

Network traffic can be volatile and unpredictable, and selecting an appropriate amount of packet capture storage can be difficult. If traffic spikes above the expected amount of traffic and causes packet capture storage to fill up, new traffic may be dropped, the packets stored may fall out of compliance with a retention policy, and/or old traffic that should still be stored may be deleted prematurely to free storage space for newer captured traffic. Responding to spikes in traffic may be difficult because important data may be lost during the process of provisioning new storage space. If traffic flow is less than expected, excess space may go unused, wasting resources.

US2018288021A1 discloses a system and method for the secure sharing of information across and open network and for performing management of keys used for encrypting and decrypting data.

US2019068564A1 discloses methods, systems, and computer readable media for monitoring encrypted packet communications. According to one method executed at an encryption aware visibility (EAV) device, the method includes receiving copies of encrypted network traffic flow records belonging to at least one communication session involving a monitored application and obtaining, from a secure session management (SSM) server, session decryption information (SDI) via a secure backchannel interface connection, wherein the session decryption information includes cryptographic keys generated by the SSM server to establish the at least one communication session. The method further includes using the cryptographic keys to decrypt the copies of encrypted network traffic flow records to produce decrypted network traffic flow records.

### BRIEF DESCRIPTION OF THE DRAWINGS/FIGURES

The accompanying drawings are incorporated herein and form a part of the specification.
Fig. 1 is a network diagram showing encrypted network traffic flows to a network packet broker and network monitoring devices according to some embodiments disclosed herein.
Fig. 2 is a network diagram including a key broker according to some embodiments disclosed herein.
Fig. 3 is a network diagram including a key broker, an endpoint agent, and server agents at a colocation center and a cloud data center according to some embodiments disclosed herein.
Fig. 4 is a network diagram illustrating a key broker, raw packet streams flowing to a network packet broker, and decrypted packet streams flowing to network monitoring devices according to some embodiments disclosed herein.
Fig. 5 is a flowchart illustrating steps of a key broker managing encryption keys provided to network monitoring devices according to some embodiments disclosed herein.
Fig. 6 is a flowchart illustrating steps of a key broker providing an encryption key to a network monitoring device, in response to a request, according to some embodiments disclosed herein.
Fig. 7 is a block diagram of an example computer system useful for implementing various embodiments disclosed herein.
Fig. 8 is a block diagram of a network management infrastructure including a packet capture manager, according to some embodiments.
Fig. 9 is a flowchart illustrating a process of managing packet capture storage, according to some embodiments.
Fig. 10 is a flowchart illustrating a process of managing packet capture storage, according to some embodiments.
Fig. 11 is a block diagram of an example computer system useful for implementing various embodiments herein.
Fig. 12 is a block diagram of a non-limiting example environment in which systems or methods described herein may be implemented.

In the drawings, like reference numbers generally indicate identical or similar elements. Additionally, generally, the left-most digit(s) of a reference number identifies the drawing in which the reference number first appears.

### DETAILED DESCRIPTION

The invention is defined in the independent claims. Particular embodiments are set out in the dependent claims.

As mentioned above, a network packet broker's (NPB) ability to decrypt network traffic, for analysis by network monitoring devices, may be limited, particularly with growing diversity of decryption keys corresponding to the network traffic the NPB manages. At least in part to deal with an NPB's limits, embodiments provide a system for managing distribution of decryption keys. The system includes a network terminal access point (TAP), configured to intercept a packet on a computer network, and a network monitoring device. The network monitoring device includes a key datastore and is configured to receive the intercepted packet and decrypt the intercepted packet when a corresponding decryption key is stored in the key datastore. The system further includes a secure keystore configured to store decryption keys and a key broker. The key broker is configured to receive metadata corresponding to the intercepted packet, retrieve from the secure keystore, based on the metadata, a decryption key corresponding to the intercepted packet, and provide the decryption key to the network monitoring device for storage in the key datastore. In this way, the system distributes keys and avoids the need for a single decryption device to store all the possible decryption keys.

One type of network monitoring device may be an intrusion detection system. In an embodiment, the system may further include an intrusion detection system configured to collect the metadata, corresponding to packets to be decrypted, based on a server name indication (SNI) field from network traffic, common name (CN) field, or a subject alternative name (SAN) field of a security certificate retrieved from network traffic and send the metadata to the key broker. The key broker may be further configured to store the metadata in a tracking database. In this way, the key broker gains access to the metadata indicating which decryption keys correspond to traffic flowing through an NPB.

The key broker may be further configured to store tracking data corresponding to both the network monitoring device and the decryption key provided to the network monitoring device. In this way, the key broker keeps track of which decryption keys have been distributed and the network monitoring device to which those keys are distributed.

The key broker may be further configured to store a lease time value corresponding to the decryption key. In this way, the key broker can determine when a decryption key can be safely removed from a network monitoring device.

The key broker may be further configured to remove the decryption key from the network monitoring device in response to expiration of the lease time. In this way, the key broker frees space in the key datastore so other decryption keys can be stored and used.

The key broker may be further configured to remove the decryption key from the network monitoring device based on a decryption key storage limit of the network monitoring device and a priority of the decryption key. In this way, even when key datastore limits are exceeded, the key broker can ensure that certain higher priority traffic is decrypted at the cost of not decrypting lower priority traffic.

The metadata may include domain information, an unencrypted destination corresponding to the packet, or an identifier of a security certificate corresponding to the decryption key. In this way, the metadata may be used to identify an appropriate decryption key for decrypting the network traffic.

The secure keystore may include an offline storage device. In this way, the decryption keys stored in the secure keystore are protected from intrusion attempts coming through the network.

The key broker may be further configured to receive a request from the network monitoring device and provide the decryption key in response to the request. In this way, an intelligent network monitoring device can request specific decryption keys for storage in the key datastore.

According to some embodiments, the key broker 202 may also be configured to collect and manage Diffie-Hellman ephemeral keys under the TLS 1.3 standard. The system includes an agent configured to run on an endpoint device or a server and passively collect an ephemeral key in response to a transport layer security handshake. The system also includes a secure keystore configured to store the ephemeral key, and a network terminal access point (TAP) configured to capture a packet on a computer network. The system further includes a key broker configured to receive metadata corresponding to the captured packet, retrieve the ephemeral key corresponding to the captured packet, from the secure keystore, based on the metadata, and provide the ephemeral key to a network monitoring device. In this way, the system collects, transmits, and stores ephemeral keys and manages distribution of the ephemeral keys to network monitoring devices that may require the ephemeral keys for decryption and analysis of the captured packets.

The agent may be further configured to send the ephemeral key, through out-of-band communications, to a key ingestion service. In this way, exposure of the ephemeral key is avoided during transmission of the ephemeral key from the agent.

The agent may be further configured to send key metadata to the key ingestion service using out-of-band communications, and the system may further include the key ingestion service configured to receive the ephemeral key and the key metadata, examine the key metadata using a website category service, and based on the examining of the key metadata, discard the ephemeral key according to a privacy policy or send the ephemeral key for storage in the secure keystore. In this way, the system discards ephemeral keys that correspond to network traffic, such as banking traffic, that should not be decrypted or analyzed based on the privacy policy.

The key ingestion service may be further configured to send the ephemeral key to the key broker for storage in the secure keystore. The key broker may be further configured to store the ephemeral key in the secure keystore. In this way, the key broker manages storage of ephemeral keys in addition to distribution or check-out of ephemeral keys.

The system may further include a network monitoring device configured to receive the ephemeral key, decrypt the captured packet using the ephemeral key, and perform analysis on the captured packet. In this way, the network monitoring device decrypts traffic encrypted according to the TLS 1.3 standard and provides visibility into TLS 1.3 network traffic.

The key broker may be further configured to store tracking data corresponding to the network monitoring device, the ephemeral key provided to the network monitoring device, and a lease time. In this way, the system tracks which ephemeral keys are distributed to which network monitoring devices and the amount of time that the network monitoring device is allowed to use the ephemeral key. This information may be used to create an audit trail.

The key broker may be further configured to remove the ephemeral key from the network monitoring device in response to expiration of the lease time. In this way, the key broker enforces the lease time of the ephemeral key and reduces unnecessary exposure of the ephemeral key.

The key broker may be further configured to delete the ephemeral key from the secure keystore based on a retention policy of the captured packet corresponding to the ephemeral key. In this way, the key broker deletes ephemeral keys that are no longer needed because the captured packets corresponding to the ephemeral keys will no longer be stored according to the retention policy. This frees space for storage of other ephemeral keys, which could number in the thousands or tens of thousands.

In addition to the system embodiments, method and computer program product embodiments are also disclosed.

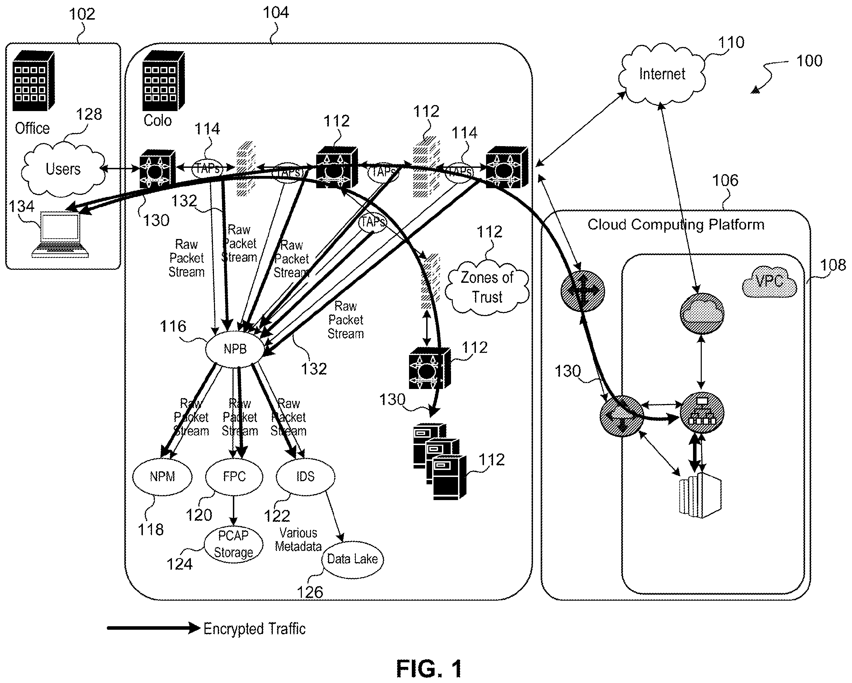

Fig. 1 is a network diagram showing network management infrastructure 100. A network management infrastructure 100 is a set of devices distributed across various network locations and used to monitor and manage a computer network. Network management infrastructure 100 includes an office location 102 and a colocation center 104 connected to a virtual private cloud 108 hosted on a cloud computing platform 106. The office location 102 represents a site where users 128 use endpoint devices to access the network. A colocation center 104 is a data center where network equipment and storage space are made available for rental to customers. A cloud computing platform 106 is a platform where computing resources are made available on-demand. A virtual private cloud 108 is a pool of computing resources available on a cloud computing platform 106 and can be isolated from other users of the cloud computing platform 106.

The virtual private cloud 108 may be connected to the colocation center 104 and the office location 102 through the internet 110. The office location 102 may comprise users 128 and terminals 134, and the colocation center 104 may comprise various zones of trust 112, network sensors 114, and network monitoring tools 116, 118, 120, 122. A zone of trust 112 is a set of system resources that are treated with the same level of security and access controls. A network sensor 114 may be a network terminal access point (TAP), a firewall log, or anything that collects information about network traffic 130 flows. Network traffic 130 flows between the office location 102, and various zones of trust 112 in the colocation center 104 and the virtual private cloud 108.

As a non-limiting example, encrypted network traffic may flow through the colocation center 104 and be captured by one or more network sensors 114 as the network traffic traverses various zones of trust 112. The network sensors 114 send a raw packet stream 132, comprising captured packets, to one or more network packet brokers 116 which forward the raw packet stream 132 to other network monitoring devices 118, 120, 122. Network monitoring device 116 is a network packet broker (NPB); network monitoring device 122 is an intrusion detection system (IDS); network monitoring device 120 is a full packet capture (FPC) device; and network monitoring device 118 is a network performance management (NPM) 118 tool. The illustration of Fig. 1 is a non-limiting example, and there is no reason why network sensors 114 and network monitoring devices 116, 118, 120, 122 cannot be deployed at the office location 102 or in the virtual private cloud 108.

Network traffic 130 may include encrypted network traffic 130 and unencrypted network traffic 130. An NPB 116 may tag, filter, replicate, de-duplicate, and load balance the raw packet stream 132. The raw packet stream 132 includes captured packets. Tagging adds metadata to the captured packets, which may include identifying the network segment where the packets came from or other contextual information useful for troubleshooting. Filtering limits captured network traffic 130 to that which is considered relevant to network management. Replication includes copying network traffic 130 from one port to another port. Replication may be used to create identical traffic flows to multiple network monitoring device 116, 118, 120, 122. Deduplication removes duplicate packets from the raw packet stream 132. Load balancing may involve dividing an incoming raw packet stream 132 among multiple network monitoring devices 116, 118, 120, 122.

NPB 116 may distribute the raw packet stream 132 to one or more network monitoring devices 116, 118, 120, 122. The NPM 118 monitors network traffic, tracks and analyzes performance metrics and generates reports on network performance. The FPC tool 120 may store captured packets in packet capture (PCAP) storage 124. The IDS may store relevant captured packets and metadata 226 in a data lake 126. Data lake 126 is a storage archive for after-the-fact forensic analysis of captured traffic. The data lake may include storage on-site, storage located in a colocation facility, or storage provided by a cloud computing platform.

One approach to establishing network visibility of encrypted traffic includes out-of-band (OOB) passive decryption. OOB passive decryption may include management of TLS certificates and deployment of decryption keys 224 on many NPBs 116 and other network monitoring devices 118, 120, 122. Network monitoring devices 116, 118, 120, 122 have limited space for local storage of decryption keys 224. In a large network infrastructure comprising hundreds of network monitoring devices 116, 118, 120, 122, for example, the number of applications running on the network and their corresponding decryption keys 224 may range in the thousands. Managing distribution of decryption keys 224 to the appropriate network monitoring devices 116, 118, 120, 122 in such a network infrastructure can become infeasible for human network operators.

The network management infrastructure 100 illustrated in Fig. 1 lacks a key broker for deploying appropriate decryption keys to the network monitoring devices 116, 118, 120, 122. Decryption keys may be manually deployed to the network monitoring devices 116, 118, 120, 122, but without a key broker, decryption key deployment is not responsive to changes in network traffic 130. Given the finite capacity of the key datastore on the NPB and other network monitoring devices, as traffic diversity increases, requiring a larger number of distinct decryption keys, ensuring the NPB has the decryption keys it needs becomes increasingly difficult.

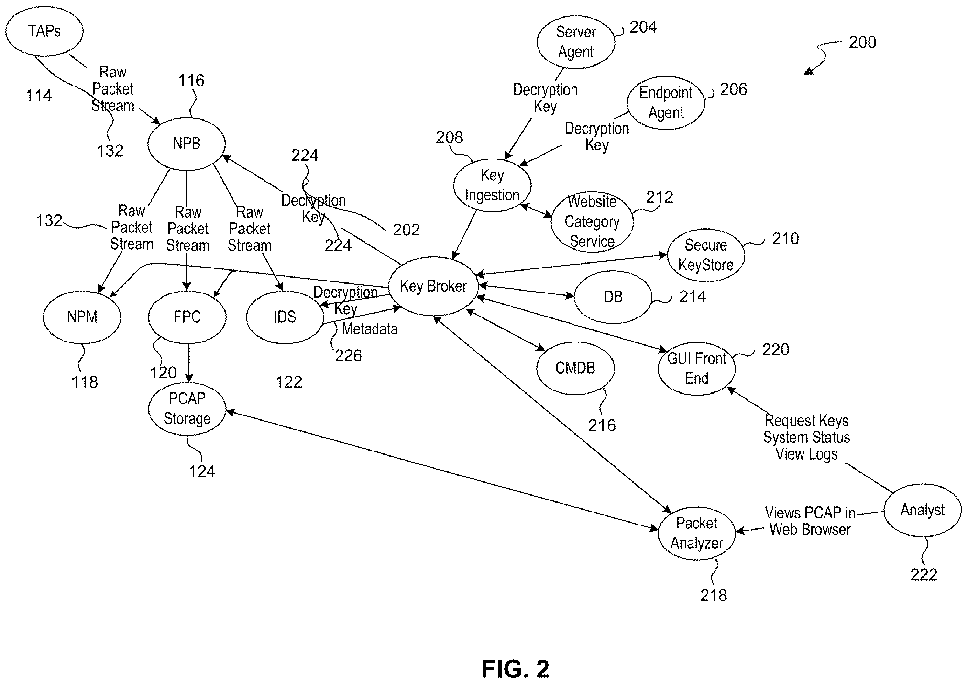

Fig. 2 is a network diagram including a key broker 202 according to some embodiments disclosed herein.

According to some embodiments, a network infrastructure 200 may comprise a key broker 202 configured to receive metadata 226 related to the raw packet stream 132. Metadata 226 may include information that can be used to identify the security certificate corresponding to a captured packet. Metadata 226 may include domain information, an unencrypted portion of a network packet, or an identifier of a security certificate corresponding to the decryption key 224. Metadata may also include information regarding how the packets were captured, the network site and network device where the packets were captured, information related to filters that were applied to the captured network traffic, and any other contextual information related to the captured packets. According to some embodiments, the metadata 226 corresponding to a packet may include one or more of SSL/X.509 certificate data, a source IP address, a source port, a destination IP address, a destination port, server name indication (SNI) field, common name (CN) field, and/or a subject alternative name (SAN), a timestamp, a site (e.g., office 102, colocation center 104, virtual private cloud 108), a network sensor 114 name, and a network monitoring device 116, 118, 120, 122 name.

The IDS may be configured to generate metadata 226. Metadata 226 generated by the IDS may include a SNI from a network packet, CN, and/or SAN entry in X.509 certificates corresponding to encrypted network traffic 130 flowing over the network infrastructure 200. The IDS may access a list of domains that belong to an entity, check for Transport Layer Security (TLS) certificates issued by the entity's intermediate and root certificate authorities, or check for TLS certificates that contain the domains in the CN or SAN fields of the TLS certificate. If captured packets match the list of domains or if the TLS certificate was issued by the entity, then the IDS may forward metadata, including the contents of one or more of the SNI, CN, or SAN fields, to the key broker 202.

The key broker 202 may use the metadata 226 to determine which decryption keys 224 are required to decrypt the network traffic 130 in the raw packet stream 132. As a non-limiting example, an X.509 certificate is a digital certificate conforming to the international X.509 public key infrastructure standard used in HTTPS secured web browsing. Included in an X.509 certificate issued to an entity is the decryption key 224 associated with that entity in addition to domain, CN or SAN fields. The key broker 202 may use the metadata 226 received from the IDS to identify a corresponding X.509 certificate and the decryption key 224 corresponding to captured packets.

Based on the metadata 226, the key broker 202 may determine which decryption keys 224 are highest priority and manage the decryption keys 224 stored on the NPB 116 or other network monitoring devices 116, 118, 120, 122. The decryption keys 224 may be made available at an infrastructure level that allows a variety of network monitoring devices 116, 118, 120, 122 to use the decryption keys 224 when necessary. According to some embodiments, a decryption key 224 may be a private key of a public key infrastructure (PKI) key pair.

According to some embodiments, the key broker 202 may obtain the metadata 226 using a publication-subscription model. The key broker 202 may subscribe to topics to which the NPB 116, NPM 118, FPC 120, IDS 122, or other network monitoring devices 116, 118, 120, 122 publish metadata 226 related to the raw packet stream 132. The published metadata 226 may list relevant server name indication (SNI) field from encrypted network traffic 130, or a common name (CN) field, or a subject alternative name (SAN) in X.509 certificates of encrypted network traffic 130 flowing over the network infrastructure 200. According to some embodiments, the key broker 202 can obtain the metadata 226 by querying the data lake 126 for SNI, CN, or SAN information from various network monitoring devices 116, 118, 120, 122. According to some embodiments, the packet broker may query SNI, CN, and/or SAN information from network monitoring devices 116, 118, 120, 122 and push the corresponding decryption keys 224 to the appropriate network monitoring devices 116, 118, 120, 122.

According to some embodiments, one or more key agents 204, 206 of the network infrastructure 200 may be configured to provide decryption keys 224 to the key broker 202 through a key ingestion 208 service. The key agents may include a server agent 204 and an endpoint agent 206. The decryption keys 224 provided by the key agents 204, 206 may include Diffie-Hellman ephemeral keys. Diffie-Hellman ephemeral keys are decryption keys 224 corresponding to network traffic under the TLS 1.3 standard. According to some embodiments, the key agents 204, 206 may be configured to send decryption keys 224 to the key ingestion 208 service. According to some embodiments, the key agents 204, 206, may be configured to deposit decryption keys 224 in the secure keystore 210.

Storing the decryption keys 224 in the secure keystore 210, even when the decryption keys 224 may no longer be deployed to network monitoring devices 116, 118, 120, 122, enables analysis, such as after-the-fact, root-cause, or forensic analysis to be performed on captured network traffic. Decryption keys 224 stored in the secure keystore 210 may be associated with a time-to-live (TTL). The TTL of decryption keys stored in the secure keystore 210 may indicate an amount of time that the decryption keys 224 should be retained in the secure keystore 210 in order to enable analysis of traffic flows to be performed on captured packets by network monitoring tools 116, 118, 120, 122 or packet analyzer software 218. The key broker 202 may set the TTL of decryption keys based on a retention policy for captured network traffic. The retention policy may define an amount of time that captured network traffic should be stored before deletion. The key broker 202 may delete decryption keys 224 from the secure keystore 210 after expiration of the TTL associated with the decryption keys 224.

A website category service 212 may be configured to identify encrypted network traffic 130 that should not be decrypted, or decryption keys 224 that should not be retained according to a privacy policy. For example, the privacy policy may identify health care traffic or personal banking website traffic as encrypted network traffic 130 that should not be decrypted. The website category service 212 may use key metadata to determine the destination website associated with each decryption key 224 and determine whether to ingest or drop the key based on the privacy policy. The server agent 204 and the endpoint agent 206 may be further configured to provide the key metadata related to the decryption keys 224. The key metadata sent by the server agent 204 and the endpoint agent 206 may also be used by the key broker 202 to determine which NPB 116 or network monitoring devices 116, 118, 120, 122 to deploy the decryption keys 224 to.

According to some embodiments, the key ingestion service 208 may be configured to send decryption keys 224 to be ingested based on the privacy policy to the key broker 202. According to some embodiments, the key ingestion service 208 may be configured to send decryption keys 224 to be ingested based on the privacy policy to the secure keystore 210.

Decryption keys 224, including RSA keys and decryption keys 224 received from the server agent 204 or endpoint agent 206, may be stored in a secure keystore 210. According to some embodiments, the secure keystore 210 comprises offline storage. The secure keystore 210 may be configured to encrypt data at rest and to encrypt data in transit. In this way, the decryption keys 224 and other sensitive data related to the decryption keys is protected from security breaches. The key broker 202 may check out or lease decryption keys 224 from the secure keystore 210 for a limited time on the behalf of the NPBs 116 and other network monitoring devices 118, 120, 122. As a non-limiting example, decryption keys 224 may be checked out for 24, 48, or 72 hours or some configurable amount of time. According to some embodiments, the key broker 202 may renew the lease on decryption keys 224 if network traffic 130 matching those decryption keys 224 has flowed over the network sensors 114 in the past day or some configurable amount of time. According to some embodiments, a decryption key 224 may be checked out indefinitely.

The secure keystore 210 may include partitions configured to prevent retrieval or writing of the private keys through side channels. The combination of a strict lease time with a single-channel write enables frequent key rotation, reduces unnecessary exposure of the decryption keys 224 that would result from storing un-used decryption keys 224 on network monitoring devices 116, 118, 120, 122, and helps to ensure that deployed decryption keys 224 are well matched to the requirements for decrypting the encrypted network traffic 130.

The network infrastructure 200 may be configured to maintain an asset list comprising sites (*e.g.,* office 102, colocation center 104, virtual private cloud 108) and associated NPBs 116 and network monitoring devices 116, 118, 120, 122 deployed throughout the network infrastructure 200. Any of the network sensors 114, network monitoring devices 116, 118, 120, 122, server agents 204, endpoint agents 206, and other network assets may be configured to report when they are active in order to facilitate creating a dynamic asset list. The asset list may be stored in a configuration management database (CMDB) 216. The key broker 202 may be configured to store tracking data in a tracking database 214. The tracking data may be related to which decryption keys 224 have been deployed to which set of NPBs 116 and network monitoring devices 116, 118, 120, 122 along with the lease time of the associated decryption key 224. Tracking data may comprise an identifier of the decryption key 224 and an identifier of the network monitoring device. According to some embodiments, the CMDB and the tracking database may be combined as a single database.

In some embodiments, an identifier may be a community ID. A community ID may be a way to generate a unique identifier for a data flow. For example, a community ID may be generated by taking a seeded hash of a five-tuple, including the source IP address, destination IP address, source port, destination port and the transport protocol. In some embodiments, the seeded hash may be compressed and a version number for the identifier may be added. The community ID should also be referenced to identify and correlate packet capture files with ephemeral keys or other types of keys.

According to some embodiments, a GUI frontend 220 may be configured to interface with the key broker 202 to provide a human operator, such as a cyber-security operations center (CSOC) analyst 222 with the ability to check out decryption keys 224 for a given time duration. Checked-out decryption keys 224 may be used in after-the-fact, root-cause, or forensic analysis in packet analyzer software 218. The time duration for which decryption keys 224 may be checked out may be limited and the set of authorized human or machine analysts 222 to whom decryption keys 224 can be checked out may be limited to reduce risk of exposing the decryption keys 224. According to some embodiments, the key broker 202 may create an audit trail by storing data related to checked-out decryption keys. The key broker 202 may store tracking data that logs which analysts 222 checked out which decryption keys 224, how long decryption keys 224 were checked out, and the number of times a decryption key 224 was checked out. Each instance of a decryption key 224 being checked out or deployed to a network monitoring device 116, 118, 120, 122 may be recorded in the tracking data. An audit trail for a particular decryption key 224 or set of decryption keys 224, a particular analyst 222, or one or more network monitoring devices 116, 118, 120, 122 may be generated based on the tracking data.

According to some embodiments, the key broker 202 may make a checked-out decryption key 224 available to a packet analyzer 218 without making the decryption key 224 directly available to the analyst 222. The packet analyzer 218 may use the decryption key 224, received from the key broker 202, to provide the analyst 222 with visibility into the decrypted network traffic without making the decryption key 224 accessible to the analyst 222.

A network infrastructure may have a significant deployment of network sensors 114. Data collected by network sensors 114 can be used by network operators or network monitoring devices 116, 118, 120, 122 to assess network security, respond to security threats and performance issues, or make adjustments to the network infrastructure 200, 300, 400 or management policies. According to some embodiments, network sensors 114 may include passive or inline bypass TAPs, including virtual TAPs. Network sensors 114 may operate in a cloud computing platform 106, in one or more of an on-premise colocation center 104, in a cloud data center, or in legacy data center facilities. Network sensors 114 may feed network traffic, ingressing and egressing various zones of trust 112 and critical points in the network infrastructure, into a NPB fabric.

The NPB fabric may comprise multiple NPBs 116 distributed at various points of the network infrastructure 200. The NPB fabric may tag, filter, replicate, deduplicate, and load balance network traffic among multiple network monitoring devices 116, 118, 120, 122. The majority of traffic that the network monitoring devices 116, 118, 120, 122 process, filter, rate limit or store is HTTPS/TLS traffic that contains encrypted payloads. A full packet capture 120 solution may have petabytes of packet level data that contain encrypted payloads. An inability of network monitoring devices 116, 118, 120, 122 to view the encrypted payload can interfere with real-time metadata 226 generation, real-time analysis of network traffic, and forensic analysis after discovering security anomalies.

According to some embodiments disclosed herein, a key broker 202 provides a method and apparatus for in-band network signaling of encrypted traffic flows to facilitate secure, dynamic, intelligent, passive decryption of network flows for monitoring network security. A key broker 202 of the disclosed embodiments may facilitate distribution of the appropriate decryption keys 224 to network monitoring devices 116, 118, 120, 122 for decryption of network traffic flows. A key broker 202 of the disclosed embodiments may use metadata 226 from network traffic flows crossing relevant inline and out-of-band monitoring infrastructure, such as network sensors 114, NPBs 116, and network monitoring devices 116, 118, 120, 122. The key broker 202 may use the metadata 226 to determine which decryption keys 224 need to be distributed to which NPBs 116 in order to send decrypted traffic to the network monitoring devices 116, 118, 120, 122.

In this way, embodiments disclosed herein enable secure, dynamic, and intelligent automated on-the-fly passive out-of-band decryption of at least TLS 1.2 and TLS 1.3 traffic in physical on-premise colocation center 104, data center, and/or a cloud computing environment. The disclosed embodiments also enable secure, dynamic, and intelligent on-demand after-the-fact decryption of TLS 1.2 and TLS 1.3 encrypted network traffic in forensic analysis tools and other available open-source or commercial tools.

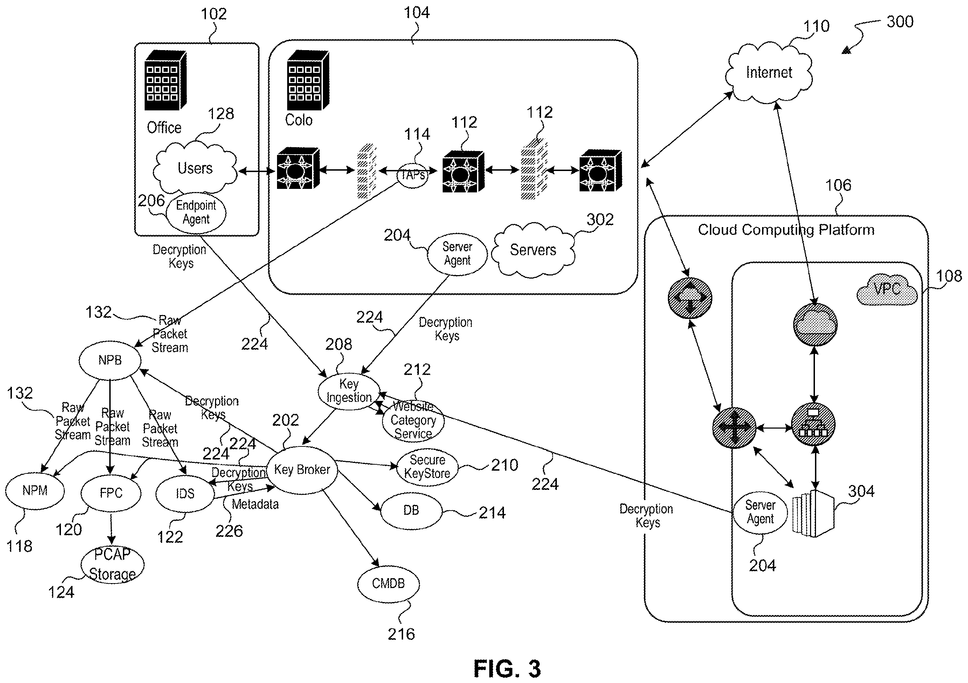

Fig. 3 is a network diagram including a key broker 202, an endpoint agent 206, and server agents at 204 a colocation center 104 and a cloud data center according to some embodiments disclosed herein.

Fig. 3 illustrates a network infrastructure 300 with a combination of some of the components illustrated in Fig. 1 or Fig. 2. According to some embodiments, one or more endpoint agents 206 may be deployed at an office location 102, and one or more server agents 204 may be deployed on servers 302 at a colocation center 104 or virtual servers 304 in a virtual private cloud 108 hosted on a cloud computing platform 106.

Network sensors 114 distributed between various zones of trust 112 may be configured to copy network traffic 130 and send a raw packet stream 132 to one or more network monitoring devices 116, 118, 120, 122. According to some embodiments, the network sensors 114 are configured to send the raw packet stream 132 to a network packet broker (NPB) 116.

According to some embodiments, an endpoint agent 206 may be installed on a user's terminal 134 and configured to monitor network traffic 130 at the user's terminal 134. The endpoint agent 206 may be configured to identify decryption keys 224 available to the user terminal 134 and send the decryption keys 224 to key ingestion 208. The endpoint agent 206 may also send key metadata with the decryption keys 224. The endpoint agent 206 may be configured to provide decryption keys 224 and key metadata passively and out-of-band.

The server agent 204 may be installed at a server in the colocation center 104 or a virtual private cloud 108 and configured to monitor network traffic 130 at the server. The server agent 204 may be configured to identify decryption keys 224 available to the server and send the decryption keys 224 to key ingestion 208. The server agent 204 may also send key metadata with the decryption keys 224. The server agent 204 may be configured to provide decryption keys 224 and key metadata passively and out-of-band. A website category service 212 may apply a privacy policy, using the key metadata associated with the decryption keys 224, to determine which packets of the raw packet stream 132 should not be decrypted. The server agent 204 and endpoint agent 206 may be configured to send Diffie-Hellman ephemeral keys to key ingestion 208, to the key broker 202, or to the secure keystore 210.

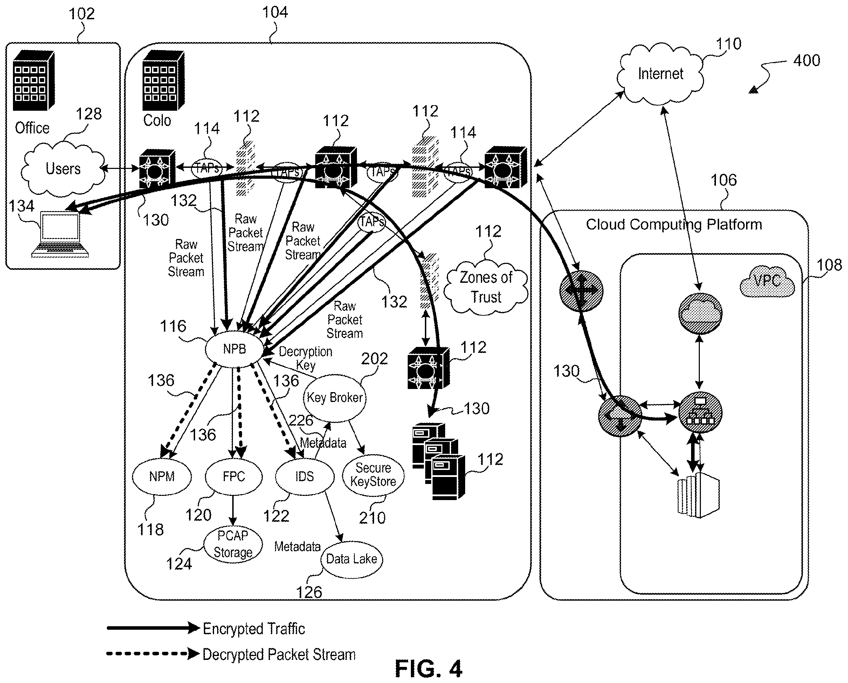

Fig. 4 is a network diagram illustrating a key broker 202, raw packet streams 132 flowing to a network packet broker 116, and decrypted packet streams 136 flowing to network monitoring devices 118, 120, 122 according to some embodiments disclosed herein.

Fig. 4 comprises elements from Fig. 1 and a representation the NPB 116 receiving a raw packet stream 132 and sending a decrypted packet stream 136 to the NPM 118, the FPC 120, and the IDS 122 of the network infrastructure 400. According to some embodiments, the key broker 202 is configured to receive metadata 226 from the IDS.

According to some embodiments, as the network traffic 130 flows across the network, network sensors 114 receive the network traffic 130 and feed a raw packet stream 132 to an NPB 116. According to some embodiments, the network sensors 114 comprise passive optical terminal access points (TAPs). The NPB 116 may be configured to tag, filter, replicate, deduplicate, and load balance network traffic 130 among a large number network monitoring devices 116, 118, 120, 122, including one or more intrusion detection systems (IDS) 122, full packet capture (FPC) 120 tools, or network performance management (NPM) 118 tools.

The IDS 122 may be configured to reassemble the raw packet stream 132. The IDS 122 may be further configured to parse the reassembled raw packet stream 132 using different protocol dissectors. The IDS 122 may be further configured to log the network traffic 130 and generate metadata 226 about the network traffic 130 flow. The metadata 226 corresponding to a packet or the network traffic 130 may comprise one or more of SSL/X.509 certificate data, a source IP address, a source port, a destination IP address, a destination port, SNI, CN, and/or SAN entry, a timestamp, a site (*e.g.,* office 102, colocation center 104, virtual private cloud 108), and a network sensor name.

According to some embodiments, the IDS may send the metadata 226 to the key broker 202. According to some embodiments, the IDS may be configured to publish the metadata 226 to a topic in a messaging system, and the key broker 202 may be configured to listen to the topic. According to some embodiments, the IDS may store the metadata 226 in a data lake 126, and the key broker 202 may be configured to query the data lake 126 to obtain the metadata 226 related to the raw packet stream 132.

The key broker 202 may be configured to maintain an asset list comprising sites (*e.g.,* office 102, colocation center 104, virtual private cloud 108) and associated network sensors 114, NPBs 116, and other network monitoring devices 118, 120, 122 deployed in the network infrastructure 200, 300, 400. The asset list may be stored in a CMDB 216.

According to some embodiments, the key broker 202 may be configured to write metadata 226 from the IDS 122 to a tracking database 214 for reference. The key broker 202 may also be configured to store tracking data in the tracking database 214. The tracking data may be related to which decryption keys 224 have been distributed to which set of NPBs 116 or other network monitoring devices 118, 120, 122. The key broker 202 may also be configured to store a lease time of the distributed decryption keys 224. The tracking data, stored in the tracking database, may comprise the site (*e.g.,* office 102, colocation center 104, virtual private cloud 108), the network monitoring device 116, 118, 120, 122, the decryption key 224, and a lease time indicating the amount of time that the decryption key 224 is valid for the network monitoring device 116, 118, 120, 122.

According to some embodiments, the key broker 202 may be configured to identify a decryption key 224 to be distributed to an identified network monitoring device 116, 118, 120, 122. The distributed decryption key 224 may include a Diffie-Hellman ephemeral key, which enables real-time decryption of a session of TLS 1.3 traffic. The identified network monitoring device 116, 118, 120, 122 may be the network monitoring device 116, 118, 120, 122 that received captured packets capable of being decrypted by the identified decryption key 224. The key broker 202 may check the tracking data in the tracking database 214 to determine whether the identified decryption key 224 has been distributed to the identified network monitoring device 116, 118, 120, 122. The key broker 202 may be configured to reset the lease time of the identified decryption key 224 in the tracking database 214 in response to determining that the decryption key 224 has already been distributed to the identified network monitoring device 116, 118, 120, 122. The key broker 202 may be configured to track and log the number of times the lease time of the identified decryption key 224 was reset. The key broker 202 may be configured to request the identified decryption key 224 from the secure keystore 210 in response to determining that the decryption key 224 has not already been distributed to the identified network monitoring device 116, 118, 120, 122. The secure keystore 210 may be configured to provide the requested decryption key 224 to the key broker 202. According to some embodiments, the key broker 202 may be configured to send the identified decryption key 224 to the identified network monitoring device 116, 118, 120, 122 via script or an application programming interface (API).

According to some embodiments, the identified network monitoring device 116, 118, 120, 122 may be configured to decrypt future network traffic 130 associated with the identified decryption key 224 received from the key broker 202. As a non-limiting example, the NPB 116 in Fig. 4 is illustrated receiving encrypted network traffic 130 in the raw packet stream 132, and sending a decrypted packet stream 136 to the NPM 118, FPC 120, and IDS 122. According to some embodiments, the identified network monitoring device 116, 118, 120, 122 may be configured to decrypt encrypted network traffic 130, sent from other network monitoring devices 116, 118, 120, 122 or from PCAP storage 124.

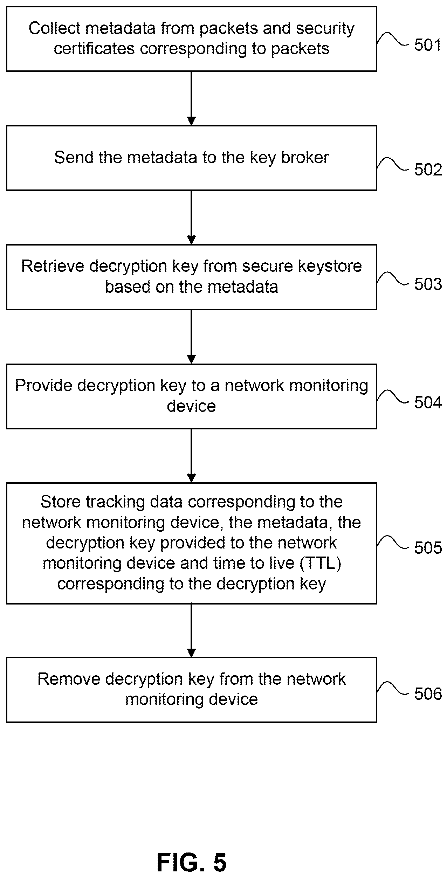

Fig. 5 is a flowchart illustrating steps of a key broker 202 managing distribution of decryption keys 224 to network monitoring devices 116, 118, 120, 122 according to some embodiments disclosed herein. The steps disclosed may be performed by one or more of the key broker 202, or any network monitoring devices 116, 118, 120, 122, including, but not limited to a network packet broker 116, a network performance management (NPM) tool 118, a full packet capture (FPC) tool 120, or an intrusion detection system (IDS) 122. Each of the components may be implemented using a processor and memory according to embodiments disclosed herein.

At step 501, one or more processors collect metadata 226, corresponding to packets, from security certificates. According to some embodiments, the metadata 226 comprises domain information retrieved from network traffic 130 by examining information found in SNI fields in the TLS client hello, Common Name (CN) or Subject Alternative Name (SAN) fields in X.509 certificates of encrypted network traffic 130. Metadata 226 may also include information regarding how the packets were captured, the network site and network device where the packets were captured, information related to filters that were applied to the captured network traffic, and any other contextual information related to the captured packets.

Secured network traffic 130 under HTTPS/TLS may include a TLS handshake. Embedded in the TLS handshake of traffic flowing across the network is the unencrypted destination of the HTTPS/TLS endpoint. The destination may include domain information (*e.g.,* application.capitalone.com) associated with an entity. According to some embodiments, the IDS 122 may access a list of domains (*e.g.,* *.capitalone.com, *.cb4good.com, *etc*.) that belong to the entity and check for TLS certificates issued by the entity's intermediate or root certificate authorities. The IDS 122 may also check for TLS certificates, returned by the server, that contain domain information of the entity in the CN or SAN fields.

At step 502, the one or more processors may send the metadata 226 to the key broker 202. The metadata may comprise domain information, such as the contents of the SNI from a network packet, or CN, or SAN fields from security certificates. The IDS 122 may forward, to the key broker 202, the metadata for network traffic 130 matching the list of domains or network traffic 130 corresponding to the SSL certificate issued by the entity. The key broker 202 may write the metadata from the IDS to a tracking database 214 for reference.

At step 503, the key broker 202 may retrieve a decryption key 224 from the secure keystore 210. The key broker 202 may request the decryption key 224 from the secure keystore 210. The requested decryption key 224 may be a decryption key 224 related to the network traffic 130 corresponding to the collected metadata 226.

The key broker 202 may access the tracking data to determine whether a decryption key 224 corresponding to the metadata 226 has already been deployed to one or more network monitoring devices 116, 118, 120, 122. In response to determining that the decryption key 224 has already been distributed to one or more network monitoring devices 116, 118, 120, 122, the key broker 202 may reset the lease time value associated with the decryption key 224. In response to determining that the decryption key 224 has not already been deployed to one or more network monitoring devices 116, 118, 120, 122, the key broker 202 may request the decryption key 224 from the secure keystore 210. If the requested decryption key 224 is available, the secure keystore 210 may send the requested decryption key 224 back to the key broker 202.

At step 504, the key broker 202 may distribute the decryption key 224, received or retrieved from the secure keystore 210, to one or more network monitoring devices 116, 118, 120, 122. The network monitoring device 116, 118, 120, 122 to which the decryption key 224 is distributed may be the network monitoring device that received the captured packet corresponding to the decryption key 224. According to some embodiments, the key broker 202 may send the decryption key 224 to a NPB 116. The key broker 202 may send the decryption key 224 over TLS to the one or more network monitoring devices 116, 118, 120, 122 via a script. According to some embodiments, the key broker 202 may send the decryption key 224 to the one or more network monitoring devices 116, 118, 120, 122 through an API, SCP transfer, or another secure mechanism. The one or more network monitoring devices 116, 118, 120, 122 to which the decryption key 224 is sent can decrypt future traffic associated with that decryption key 224, send a decrypted packet stream 136 to other tools, and/or decrypt PCAP files sent from other network monitoring devices 116, 118, 120, 122 that were previously not decrypted.

At step 505, the key broker 202 may store tracking data corresponding to the distributed decryption key 224. The tracking data may be stored in a tracking database 214. The tracking data may comprise the network monitoring device 116, 118, 120, 122 to which the decryption key 224 was distributed, the site where the network monitoring device is deployed, the metadata 226 corresponding to the decryption key 224, an identifier of the decryption key 224, and a lease time value for the decryption key 224. The lease time value may identify a length of time that the decryption key 224 is valid for deployment on the network monitoring device 116, 118, 120, 122.

According to some embodiments, the key broker 202 may maintain an asset list comprising sites and associated NPBs 116 and network monitoring devices 118, 120, 122 deployed in the network infrastructure 200, 300, 400. The asset list may be stored in a configuration management database (CMDB) 216.

At step 506, the key broker 202 may remove the distributed decryption key 224 from the network monitoring device 116, 118, 120, 122. The key broker 202 may remove the decryption key 224 from the network monitoring device in response to expiration of the lease time. In this way, the key broker 202 may enforce the decryption key 224 lease or check out mechanism by pushing decryption keys 224 to the one or more network monitoring devices 116, 118, 120, 122, and removing the decryption keys 224 from the one or more network monitoring devices 116, 118, 120, 122. Removing the decryption key 224 from the network monitoring device 116, 118, 120, 122 also reduces exposure of the security keys to a potential security breach. The key broker 202 may rotate decryption keys 224 that are distributed to network monitoring devices 116, 118, 120, 122 as security certificates and their corresponding decryption keys 224 near their expiration date and are renewed or have new decryption keys 224 generated.

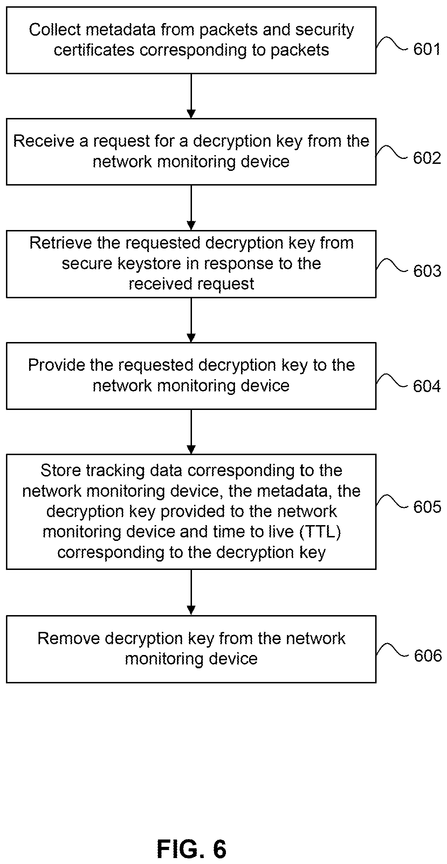

Fig. 6 is a flowchart illustrating steps of a key broker 202 providing an encryption key to a network monitoring device, in response to a request, according to some embodiments disclosed herein.

At step 601, one or more processors may collect metadata 226 corresponding to packets. The metadata 226 may be found in the security certificates corresponding to the packets, or in a TLS handshake. Collecting metadata 226 may be performed according to any of the embodiments disclosed herein.

At step 602, the key broker 202 may receive a request for a decryption key 224 from a network monitoring device 116, 118, 120, 122. According to some embodiments, the key broker 202 may be configured to support intelligent network monitoring devices 116, 118, 120, 122 by responding to requests for decryption keys 224. The network monitoring device 116, 118, 120, 122 may be an intelligent device configured to identify decryption keys 224 corresponding to a raw packet stream 132 that the network monitoring device 116, 118, 120, 122 receives from network sensors 114. A network monitoring device 116, 118, 120, 122 may request a decryption key 224 via an API call based on locally processing relevant SNI fields in the TLS Client Hello, CN, and/or SAN fields in X.509 Certificates of encrypted network traffic 130. According to some embodiments, a plug-in for an open source IDS 122 may parse for relevant hostnames in the SNI field of TLS Client Hellos during TLS handshakes and make an API request to the key broker 202 for the proper decryption key 224. The key broker 202 may also push decryption keys 224 to the network monitoring device 116, 118, 120, 122.

At step 603, the key broker 202 may retrieve the requested decryption key 224 from the secure keystore 210 in response to the received request. The key broker 202 may request the decryption key 224 from the secure keystore 210. The requested decryption key 224 may be a decryption key 224 related to the network traffic 130 from which the metadata 226 was collected. The secure keystore 210 may send the requested decryption key 224 to the key broker 202.

At step 604, the key broker 202 may provide the requested decryption key 224 to the network monitoring device 116, 118, 120, 122. According to some embodiments, the key broker 202 may send the requested decryption key 224 over TLS to the one or more network monitoring devices 116, 118, 120, 122 via a script. According to some embodiments, the key broker 202 may send the requested decryption key 224 to the one or more network monitoring devices 116, 118, 120, 122 through an API, SCP transfer, or another secure mechanism. The one or more network monitoring devices 116, 118, 120, 122 to which the requested decryption key 224 is sent can decrypt future traffic associated with that decryption key 224, send a decrypted packet stream 136 to other tools, and/or decrypt PCAP files sent from other network monitoring devices 116, 118, 120, 122 that were previously not decrypted.

At step 605, the key broker 202 may store tracking data corresponding to the requested decryption key 224. According to some embodiments, the key broker 202 may maintain an asset list comprising sites and associated network monitoring devices 116, 118, 120, 122 deployed in the network infrastructure 200, 300, 400. The asset list may be stored in a configuration management database (CMDB) 216. The tracking data may comprise the network monitoring device 116, 118, 120, 122 to which the requested decryption key 224 was distributed, the site where the network monitoring device is deployed, the metadata 226 corresponding to the requested decryption key 224, an identifier of the requested decryption key 224, and a lease time for the requested decryption key 224. The lease time may identify a length of time that the requested decryption key 224 is valid for storage on the network monitoring device 116, 118, 120, 122. The tracking data may be stored in a tracking database 214.

According to some embodiments, the key broker 202 may renew a lease time for the requested decryption key 224 in response to the network monitoring device 116, 118, 120, 122 indicating to the key broker 202 that the requested decryption key 224 is still needed. The network monitoring device 116, 118, 120, 122 may indicate that the requested decryption key 224 is still needed by sending a second request for the decryption key 224 to the key broker 202. The key broker 202 may check the lease time for the requested decryption key 224 in the tracking data and reset the lease time in response to the request from the network monitoring device 116, 118, 120, 122.

The key broker 202 may be configured to differentiate between network traffic 130 based on the TLS 1.2 standard RSA private keys and network traffic 130 based on the TLS 1.2 or TLS 1.3 ephemeral keys and set the lease time accordingly. Although RSA private keys may have an expiration time of months or years, and this expiration may be referred to as a time-to-live, the lease time created by the key broker 202 and associated with distributed decryption keys 224 is distinct from this expiration time of RSA keys. Ephemeral keys are typically generated, used, and discarded with a single communications session. According to some embodiments, the lease time of an ephemeral key stored on a network monitoring device 116, 118, 120, 122 may be set to expire in response to the end of the communications session for which the ephemeral key was generated. This differentiation of the lease time based on the type of decryption key 224 (RSA private key or ephemeral key) limits the time duration that a network monitoring device 116, 118, 120, 122 stores decryption keys 224 and limits the network monitoring devices 116, 118, 120, 122 to which the decryption key 224 is deployed, reducing the risk of exposure of decryption keys 224. This mechanism also helps to provide an audit trail.

At step 606, the key broker 202 may remove the requested decryption key 224 from the network monitoring device 116, 118, 120, 122. The key broker 202 may remove the requested decryption key 224 from the network monitoring device in response to expiration of the lease time. The key broker 202 may enforce the decryption key 224 lease or check out mechanism by providing requested decryption keys 224 to the one or more network monitoring devices 116, 118, 120, 122, and removing the decryption keys 224 from the one or more network monitoring devices 116, 118, 120, 122. The key broker 202 may rotate decryption keys 224 that are distributed to network monitoring devices 116, 118, 120, 122 as security certificates and their corresponding decryption keys 224 near their expiration date and are renewed or have new decryption keys 224 generated.

According to some embodiments, the key broker 202 may remove the decryption key 224 from the network monitoring device 116, 118, 120, 122 based on a decryption key 224 storage limit of the network monitoring device 116, 118, 120, 122. The key broker 202 may further remove the decryption key 224 from the network monitoring device based on a priority of the decryption key 224. As network traffic 130 flows change, some decryption keys 224 distributed to the network monitoring device 116, 118, 120, 122 may no longer be required for decrypting network traffic, while other different decryption keys 224 may be required instead. Decryption keys 224 may have differing priorities. As a non-limiting example, decryption keys 224 corresponding to more recent network traffic 130 may have a higher priority. In response to the changes in network traffic 130, the key broker 202 may remove lower priority keys from the network monitoring device 116, 118, 120, 122 and replace them with higher priority keys. The decryption keys 224 that are removed from the network monitoring device 116, 118, 120, 122 may be determined in part based on the storage limits of the network monitoring device 116, 118, 120, 122. The decryption keys 224 that are removed from the network monitoring device 116, 118, 120, 122 may also be determined in part based on an amount of traffic corresponding to the decryption keys 224 of the network monitoring device 116, 118, 120, 122.

According to some embodiments, the key broker 202 may be configured to manage distribution of Diffie-Hellman ephemeral keys under the TLS 1.3 standard finalized in August of 2018. The TLS 1.3 standard removed RSA key exchange and mandated an ephemeral Diffie-Hellman key exchange to enable perfect forward secrecy (PFS). The TLS 1.3 standard impacts how passive out-of-band decryption can be achieved. The key broker 202 may encompass and extend a PKI with the collection, generation, transmission, and or storage of ephemeral keys.

A distributed key broker 202 system may comprise multiple key brokers 202, each positioned in close network proximity to a subset of the network monitoring devices 116, 118, 120, 122 in the network infrastructure. Each key broker 202 may be configured to monitor metadata 226 from encrypted network traffic 130 flowing over the corresponding subset of the network monitoring devices 116, 118, 120, 122. A key broker 202 may receive a decryption key 224, including an ephemeral session key, from a key agent 204, 206 installed on an endpoint terminal 134 that is sending or receiving the network traffic 130 through the network infrastructure 200, 300, 400.

A key broker 202 may be configured to examine the Server Name Indication (SNI) of a packet, and to determine, based on the SNI, whether the network traffic 130 should not be decrypted due to a privacy policy. The key broker 202 may be further configured to flag the ephemeral key for deletion in response to the key broker 202 determining not to decrypt the packet. The distributed key broker 202 system may be configured to provide to network monitoring devices 116, 118, 120, 122 appropriate ephemeral keys for on-demand real-time network traffic 130 decryption for a suspicious on-going TLS 1.3 session. The key broker 202 may be configured to store ephemeral keys in the secure keystore 210 for after-the-fact decryption and forensic analysis of network traffic 130.

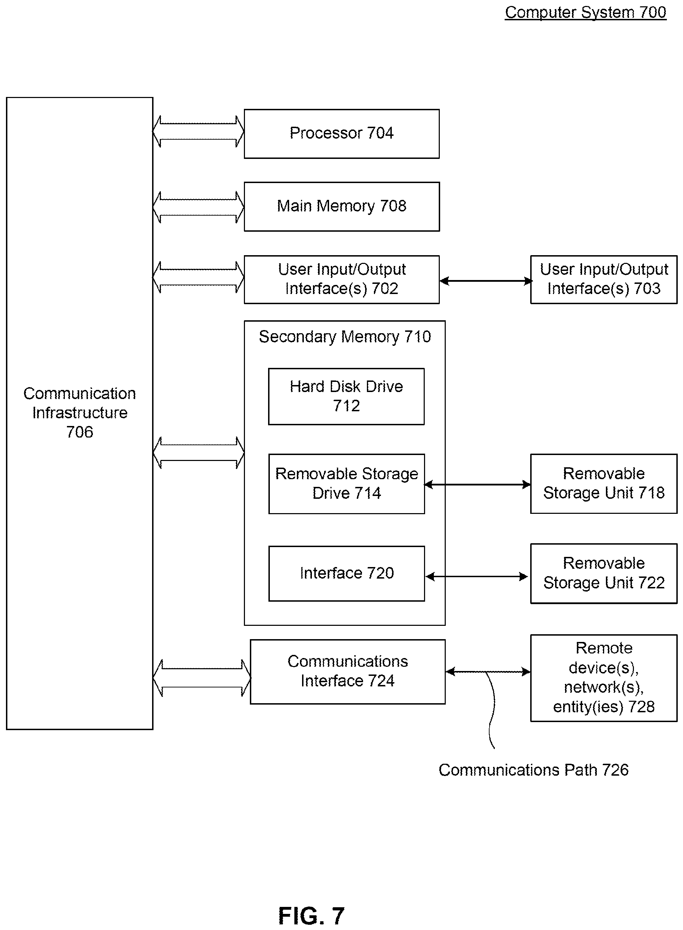

Fig. 7 is a block diagram of an example computer system useful for implementing various embodiments disclosed herein.

Various embodiments may be implemented, for example, using one or more well-known computer systems, such as computer system 700 shown in FIG. 7. One or more computer systems 700 may be used, for example, to implement any of the embodiments discussed herein, as well as combinations and sub-combinations thereof.

Computer system 700 may include one or more processors (also called central processing units, or CPUs), such as a processor 704. Processor 704 may be connected to a communication infrastructure or bus 706.

Computer system 700 may also include user input/output device(s) 703, such as monitors, keyboards, pointing devices, etc., which may communicate with communication infrastructure 706 through user input/output interface(s) 702.

One or more of processors 704 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 700 may also include a main or primary memory 708, such as random access memory (RAM). Main memory 708 may include one or more levels of cache and/or registers. Main memory 708 may have stored therein control logic (i.e., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 may include a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 may read from and/or write to removable storage unit 718.

Secondary memory 710 may include other means, devices, components, instrumentalities or other approaches for allowing computer programs and/or other instructions and/or data to be accessed by computer system 700. Such means, devices, components, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 700 may further include a communication or network interface 724. Communication interface 724 may enable computer system 700 to communicate and interact with any combination of external devices, external networks, external entities, etc. (individually and collectively referenced by reference number 728). For example, communication interface 724 may allow computer system 700 to communicate with external or remote devices 728 over communications path 726, which may be wired and/or wireless (or a combination thereof), and which may include any combination of LANs, WANs, the Internet, etc. Control logic and/or data may be transmitted to and from computer system 700 via communication path 726.

Computer system 700 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 700 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 700 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 700, main memory 708, secondary memory 710, and removable storage units 718 and 722, as well as tangible articles of manufacture embodying any combination of the foregoing. Such control logic, when executed by one or more data processing devices (such as computer system 700), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

It is to be appreciated that the Detailed Description section, and not the Abstract section, is intended to be used to interpret the claims. The Abstract section may set forth one or more but not all exemplary embodiments of the present invention as contemplated by the inventor(s), and thus, is not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims.

Computer network management may include monitoring and capturing packets sent over the network to identify security threats, detect and correct network communication issues, or perform forensic analysis. Packets may include a header and a payload. The header may include the source address and destination address of the packet. The payload is typically encrypted and may contain data related to an application using network resources. Although packet headers can provide some insight into the network traffic, certain analysis and threat detection requires capturing and decrypting the packet payload.

Full packet capture (FPC) is a method of network monitoring where the packet header and payload are captured and stored. FPC may also include storing metadata related to the captured packets and acquiring and storing decryption keys required to decrypt encrypted packet payloads.

Storage of captured packets has historically taken a static approach due to the deployment of network infrastructures on-premise in data centers and third-party colocation centers. A colocation center is a data center where network equipment and storage space are made available for rental to customers. FPC requires significant amounts of storage for writing packets to disk. The amount of storage required depends on the amount of traffic the FPC solution is expected to capture and how long the captured traffic needs to be stored. Static storage capacity may be added based on an expectation of increased network traffic or a planned change in a retention policy. The retention policy includes service level requirements such as a time-to-live (TTL) that defines an amount of time that captured packets should be stored before deletion. Often, packet capture data is stored in a ring buffer, which deletes old data by overwriting it with new data. Adding capacity may involve purchasing, deploying, and configuring additional storage. This process is costly and can take months to deliver the extra capacity on the data center floor.

Network traffic levels on a network may be variable and may rapidly increase over time. If network traffic levels spike or consistently increase to sufficiently overwhelm the static capacity of the on-premise FPC solution, then packets may be dropped, leading to missing data, missing forensic evidence, or failure to meet the requirements of the retention policy. An FPC solution may be configured to provide a retention timeframe for the captured packets and metadata related the captured packets. The metadata may index the captured packets. Example metadata may include identifying information of a security certificate corresponding to a captured packet, domain information, a source IP address, a source port, a destination IP address, a destination port, or an unencrypted portion of the captured packet. Metadata may also include information regarding how the packets were captured, a timestamp, the network site and network device where the packets were captured, information related to filters that were applied to the captured network traffic, and any other contextual information related to the captured packets. The captured packets and the metadata may be collectively referred to as PCAP. The factors that determine the amount of PCAP storage space to deploy for an FPC solution include the rate of network traffic and the number of hours (days, weeks, or months) of desired PCAP retention. As a non-limiting example, if the traffic levels are 10 Gigabits per second (including network traffic and metadata) and the Retention policy is 7 days, then the FPC solutions requires 756TB of storage.

Some full packet capture solutions include single-tiered storage that implements a ring buffer. A ring buffer overwrites older data to continuously capture new data without exceeding the capacity of a disk or storage volume. This kind of single-tiered storage can be costly and may require long lead times to upgrade when network traffic increases significantly over time. These FPC solutions are unintelligent. That is, they may be configured to capture everything on the network because the FPC solution cannot distinguish malicious traffic from normal traffic.

According to some embodiments, an intelligent FPC solution may include multi-tiered storage systems with a retention policy that intelligently determines which packets to save for later analysis by moving them from a primary storage 804 to a secondary storage. This multi-tiered storage system enables deployment of significantly less local storage and intelligently copying interesting or malicious captured traffic from a primary storage 804 ring-buffer and into a secondary storage service. Applying a multi-tier storage architecture along with a retention policy to intelligently move captured traffic out of the ring buffer solves the storage limitations of traditional full packet capture solutions. A packet capture manager 802 of the disclosed embodiments integrates with other network monitoring devices 818 that may identify captured packets to move from primary storage 804 to secondary storage. The packet capture manager 802 also uses machine learning to predict which PCAP files can be moved from the ring buffer in primary storage 804 to long term secondary storage. Because the secondary storage stores only captured network traffic considered to be possibly useful for investigating network security events or performance issues, the storage requirements of the secondary storage may be much smaller than the storage requirements of the primary storage 804, and the TTL of captured packets stored in the secondary storage can be higher. Alternatively, the primary storage may be smaller than the secondary storage as the machine learning gets smarter and discriminates between packets more effectively. The secondary storage may increase the effective available PCAP retention to an unlimited amount of time for packets of interest.

According to some embodiments, a system for packet capture management is configured to operate in an on-premise or cloud computing environment, where one or more network Terminal Access Points (TAPs) 814 capture network traffic and send captured traffic to a full packet capture module 820. The full packet capture module 820 of some embodiments includes a processor and memory configured to store a first network packet in a primary storage 804. A retention policy specifies an amount of time that traffic captured by the packet capture management system should be stored and includes a time-to-live (TTL) of the first network packet. The packet capture manager 802 receives an instruction, from a first network monitoring device 818 that monitors or analyzes the traffic, identifying the first network packet capture file as being of interest to a network administrator. A network packet capture file stores a captured data flow, including a plurality of packets, between a source and a destination exchanging network packets. An example data flow may be an HTTP request and response. In response to the instruction, the packet capture manager 802 moves the first network packet capture file from the primary storage 804 to a secondary storage. In response to the moving, the packet capture manager 802 changes the TTL to specify that the first network packet capture file remains in the secondary storage after the first network packet capture file is scheduled for deletion in the primary storage 804.

The system may be further configured to store a second network packet capture file in the primary storage 804 and store metadata corresponding to the first network packet capture file and the second network packet. Using a machine learning model, the system may analyze historical data of instructions received from the first network monitoring device 818. The analysis may include analyzing a relationship between the metadata the instructions. In this way, the system uses a machine learning model to learn what network packets are likely to be packets of interest.

The system may be further configured to flag the second network packet capture file as a data flow of interest based on the machine learning model analysis. In this way, the packet capture manager 802 system identifies packets of interest without explicit instructions from network monitoring devices 818.

The system may be further configured to delete the second network packet capture file from the primary storage 804 based on a change in a network traffic rate and an amount of storage provisioned for the primary storage 804. In this way, the system frees space for newer captured packets to be stored in the primary storage 804.

The primary storage 804 of the system may comprise an on-demand cloud storage service and the system may be further configured to resize the primary storage 804 based on a change in a network traffic rate. In this way, retention policy requirements may be met when traffic levels increase and the system can conserve resources when traffic levels decrease.

The system may be further configured to send an instruction to a second network monitoring device 818, or to a key broker that manages decryption keys for the purposes of network traffic analysis, to set a TTL of a decryption key stored in a secure keystore 810. The setting of the TTL of the decryption key is based on a retention policy corresponding to network packets associated with the decryption key. In this way, the packet capture manager system coordinates with other network management systems to avoid premature deletion or unnecessary storage of decryption keys corresponding to captured packets. The TTL of decryption key is matched to the TTL of the captured packets corresponding to the decryption key.

The packet capture manager 802 system may be further configured to send an instruction to another device, such as a key broker, to delete a decryption key from a secure keystore 810 in response to expiration of the TTL of the first network packet. In this way, the system managed decryption key storage by causing deletion of decryption keys corresponding to captured packets that will no longer be stored because of an expired TTL.

In addition to the system embodiments, method and computer program product embodiments are also disclosed.

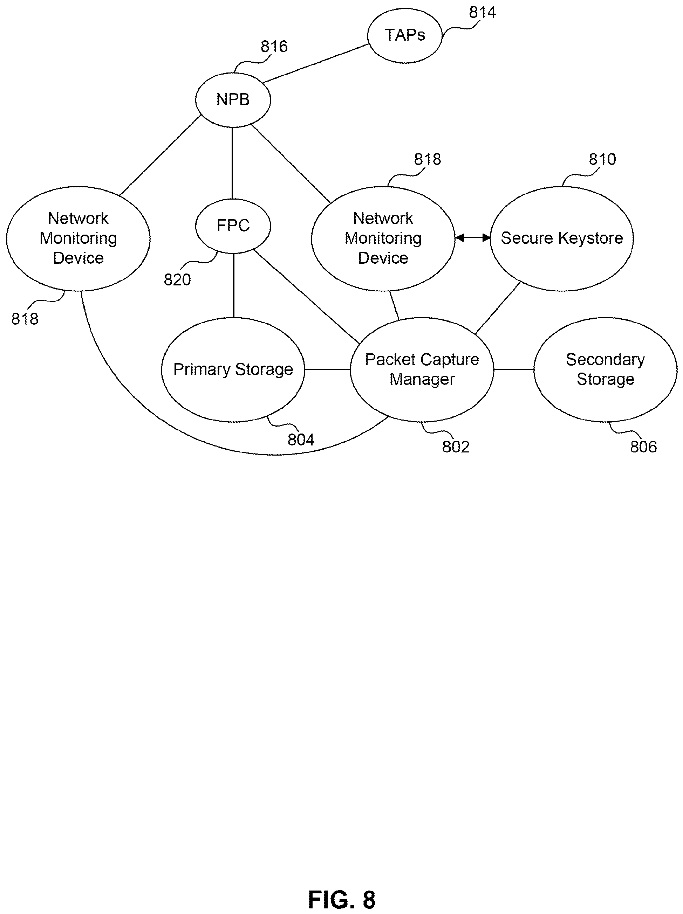

Fig. 8 is a block diagram of a network infrastructure including a packet capture manager 802 according to some disclosed embodiments.

According to some embodiments, a packet capture manager 802 may be implemented in a network environment or a cloud computing environment including one or more terminal access points (TAPs) 814, a network packet broker (NPB) 816, and one or more network monitoring devices 818.

The one or more TAPs 814 may include any hardware or virtual device capable of monitoring or copying network traffic as the network traffic traverses the network. The one or more TAPs 814 may include passive or active TAPs 814. The one or more TAPs 814 may be configured to capture network traffic and send captured network traffic to the NPB 816.

A network packet broker (NPB) 816 is a device configured to receive captured packets from one or more TAPs 814 and distribute the captured packets to the one or more network monitoring devices 818. An NPB 816 may be configured to tag, filter, replicate, de-duplicate, and load balance a raw packet stream received from one or more TAPs 814. Tagging adds metadata to the captured packets, which may include identifying the network segment where the packets came from or other contextual information useful for troubleshooting. Filtering limits captured network traffic to that which is considered relevant to network management. Replication includes copying network traffic from one port to another port. Replication may be used to create identical traffic flows to multiple network monitoring devices 818. Deduplication removes duplicate packets from the raw packet stream. Load balancing may involve dividing an incoming raw packet stream among multiple network monitoring devices 818.

Network monitoring devices may include an intrusion detection system (IDS), a network performance management (NPM) 818 tool, a network packet broker (NPB) 816 or any device configured to receive captured packets and perform further analysis or processing on the captured packets. A person of ordinary skill in the art would understand the variety of functions that could be performed by a network monitoring device 818. Although one NPB 816 is shown in Fig. 8, this is purely for illustration purposes, and the environment may include multiple NPBs 816. The network environment may further include a full packet capture (FPC) device 820, a primary storage 804, a secondary storage 806, and a secure keystore 810.

The full packet capture (FPC) device 820 may include any device configured to capture header data and payload data of packets. The FPC device 820 may receive and store all packets received and forwarded from the NPB 816. The FPC device 820 may be configured to store captured packets, including header data and payload data, in the primary storage 804. According to some embodiments, the NPB 816 may be configured to send all captured network traffic to the FPC device 820 and filtered network traffic to each of the one or more network monitoring devices 818.

The secure keystore 810 may comprise offline storage for storing decryption keys corresponding to captured network traffic. The secure keystore 810 may be configured to encrypt data at rest and to encrypt data in transit. The secure keystore 810 may be configured to provide decryption keys 224 to the NPB 816 or to the one or more network monitoring devices 818 or to the packet capture manager 802.

The primary storage 804 may include local on-premise storage, cloud-based storage or any computer readable storage device or storage service. The primary storage 804 may be configured as a ring buffer, continuously overwriting the oldest data with the newest captured packets from the FPC device 820. The size of the ring buffer may depend on the amount of network traffic being captured and the amount of time to store captured packets defined in a retention policy.

The secondary storage 806 may include on-premise storage, cloud-based storage or any computer readable storage device or storage service. The secondary storage 806 may be configured to store packets that the packet capture manager 802 has identified as packets of interest.

The packet capture manager 802 may be configured to be in communication with the FPC device 820, the one or more network monitoring devices 818, the secure keystore 810, the primary storage 804, and the secondary storage 802.

As a non-limiting example of the interaction of the devices illustrated in Fig. 8, the one or more TAPs 814 may capture packets from network traffic and send the captured packets to the NPB 816. The NPB 816 may forward captured packets to the FPC device 820, which stores the captured packets in the primary storage 804. The NPB 816 may also forward one or more of the captured packets to one or more network monitoring devices 818. Each captured packet may be stored in a packet capture (PCAP) file that stores all the packets in a data flow between a source and destination network address and transport protocol port (e.g., between a source Internet protocol (IP) address/source transmission control protocol (TCP) port and a destination IP address/destination TCP port). The data flow may include packets both from the source to the destination and vice versa (e.g., when a reply is made). The packet capture file may have a time-to-live (TTL) according to a retention policy. The retention policy may include a TTL defining a minimum amount of time that each captured packet should be stored (in any one of the primary or secondary storage 804 or 806) before deletion.

According to some embodiments, the packet capture manager 802 may receive an instruction from the network monitoring devices 818, and the instruction may identify one or more captured data flows from NPB 816 as data flows of interest. To identify a data flow, a community ID may be used. The community ID may be a way to generate a unique identifier for a data flow. For example, a community ID may be generated by taking a seeded hash of a five-tuple, including the source IP address, destination IP address, source port, destination port and the transport protocol. In some embodiments, the seeded hash may be compressed and a version number for the identifier may be added. The community ID should also be referenced to identify and correlate packet capture files with ephemeral keys. As a non-limiting example a network monitoring device 818 may be an intrusion detection system. The intrusion detection system (IDS) may detect a suspicious network traffic pattern or suspicious data in a packet header or packet payload. The IDS may send an instruction to the packet capture manager 802 including metadata that identifies the one or more captured packet capture files detected by the IDS. The packet capture manager 802 may identify one or more captured packet files as data flows of interest based on the instructions received from the IDS. The packet capture manager 802 may flag the identified packets of interest.

Other network monitoring devices 818 may be used as well. Examples of network monitoring devices 818 include a user activity monitoring device (such as the Insider Threat application available from ForcePoint of Austin, Texas), a data loss prevention device, or a proxy server. The various network monitoring devices 818 may communicate with each other or with other components, such as packet capture manager 802, using a stream-processing software platform. Stream processing is a computer programming paradigm that allows some applications to more easily exploit a limited form of parallel processing. Given a sequence of data (a stream), a series of operations is applied to each element in the stream. An example of such a stream-processing software platform is an APACHE KAFKA platform available from the Apache Software Foundation of Wakefield, Massachusetts.

According to some embodiments, the packet capture manager 802 may analyze historical data related to captured packets and identify a captured data flow as a data flow of interest. The packet capture manager 802 may flag the identified data flow of interest. As a non-limiting example, historical data may include a past detection of malware communication or infection. The detected malware may be associated with packets sent to or received from a suspicious domain. Analysis of the historical data may detect an association between the suspicious domain and the detection of malware. Based on this analysis, the packet capture manager 802 may detect the suspicious domain in a captured packet and identify the data flow including the captured packet as a data flow of interest.

In another non-limiting example, the packet capture manager 802 may analyze historical data containing suspicious traffic patterns associated with a detected security breach. In different examples, suspicious traffic may be identified by evaluating the number of bytes transferred or the ratio of bytes in versus out. In another example, suspicious traffic may be identified according to the destination IP address or domain of the data flow in the packet capture file. Based on this analysis, the packet capture manager 802 may detect the suspicious traffic pattern in the captured packets stored in the primary storage 804 and identify the captured data flows including the packets associated with the suspicious traffic pattern as data flows of interest.

The packet capture manager 802 may copy or move the identified packet capture files that store the data flows of interest from the primary storage 804 to the secondary storage 806. According to some embodiments, packet capture files copied or moved to the secondary storage 806 may be deleted from the primary storage 804. This immediately frees space in the primary storage 804, which reduces the overall space required for storing captured packet capture files in a manner conforming to the retention policy. According to some embodiments, packet capture files copied to the secondary storage 806 may be marked or otherwise identified as safe for overwriting. When allocated storage space is full, the FPC device 820 may overwrite marked packet capture files in the primary storage 804 to meet the requirements of the retention policy. In response to moving a packet capture file to the secondary storage 806, the packet capture manager 802 may change the TTL of the moved captured packet file to specify that the moved captured packet file remains in the secondary storage 806 after the captured packet file is scheduled for deletion in the primary storage 804.

In this way, the packet capture manager 802 may preserve data flows of interest and implement a more complex retention policy using a multi-tiered storage system. The more complex retention policy may include a first duration for storing packets in the primary storage 804 and a second duration for storing packets belonging to data flows of interest in the secondary storage 806. The data flows of interest are more likely to be useful in future investigations or forensic analysis after discovery of a security breach or performance issue. The quantity of network traffic identified as data flows of interest is also likely to be much lower than the total amount of network traffic that is initially stored. This enables data flows of interest to be stored for a much longer period of time while still allowing for feasible storage requirements.

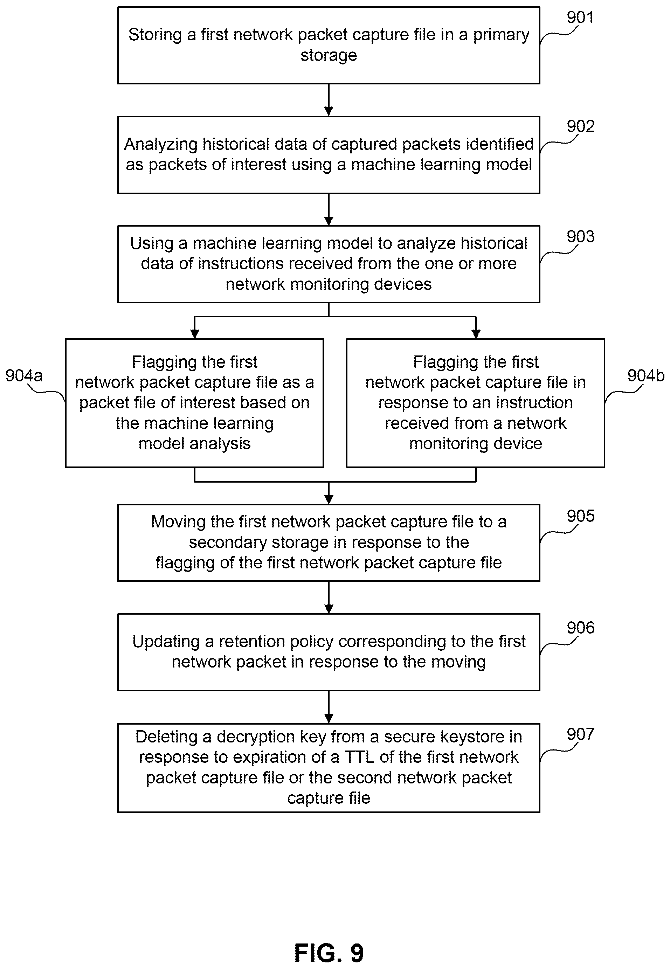

Fig. 9 is a flowchart illustrating a process of managing packet capture storage according to some disclosed embodiments. Network traffic may be captured by the TAPs 814, and sent to one or more NPBs 816. Fig. 8 illustrates one NPB 816 for illustration purposes only, but there is no reason why a network monitoring infrastructure cannot have multiple NPBs 816. The NPB 816 may forward captured network traffic to the FPC device 820. Captured network traffic may include multiple captured network packets.

At step 901, the FPC device 820 may store a first network packet capture file in the primary storage 804. The first network packet capture file may be associated with a TTL, which indicates how long the packet capture file should be stored based on the retention policy.

According to some embodiments, the TTL of packet capture files may have a relationship to the TTL of decryption keys, including ephemeral keys, corresponding to the data flows of the packet capture files. The TTL of ephemeral keys under the transport layer security (TLS) 1.3 standard is different than the TTL of RSA private keys for TLS 1.2 and below. RSA Keys typically have a 1-2 year expiration while ephemeral keys are created and discarded in conjunction with a single communications session. According to some embodiments, the TTL of ephemeral keys may be based on the retention policy. This is because a given ephemeral key can only decrypt packets from a single TLS session, and if the retention policy dictates that a PCAP is only stored for 7 days, for example, then the TTL of the ephemeral key for that PCAP should also be 7 days.

At step 902, the FPC device 820 may store metadata corresponding to the first network packet capture file and the second network packet capture file. Metadata may be stored in the primary storage 804 with the first network packet capture file and the second network packet capture file or metadata may be stored in a separate storage and linked to the corresponding packet capture files in the primary storage 804.

At step 903, the packet capture manager 802 may analyze historical data using a machine learning model. According to some embodiments, the historical data may be data related to previously captured packets that were identified as suspicious or associated with security breaches or network performance issues. According to some embodiments, the historical data may be data related to instructions received from one or more network monitoring devices 818. To correlate the data flows between the various network monitoring devices 818, a community ID may be used, as described above. The instructions received from the one or more network monitoring devices 818 may identify captured packets or data flows related to suspicious activity, network performance issues, security breaches, or otherwise of interest based on the security policies implemented by the network monitoring devices 818. The instructions may include criteria for identifying data flows of interest, such as a time frame, a source address, a destination address, for example.

The packet capture manager 802 may identify packet capture files as storing data flows of interest to be copied from primary storage 804 to secondary storage 806. Identification of packet capture files may include flagging packet capture files as data flows of interest. Data flows of interest may include packets sent to or from a suspicious domain, packets involved in suspicious traffic patterns, traffic containing suspicious data in the packet header, packets containing suspicious data in the packet payload, or any packets that may violate network security policies. Network security policies may differ from one network environment to another a person skilled in the art would understand that identifying data flows of interest depends, at least in part, on the particular goals of network administrators. The packet capture manager 802 may flag data flows based on the machine learning model analysis or based on instructions received from the network monitoring devices 818.

At step 904a, the packet capture manager 802 may flag the first network data flow as a data flow of interest based on the machine learning model analysis. The machine learning model may identify data flows of interest independently of and in addition to packets identified base on instructions received from the network monitoring devices 818. Over time, the machine learning model may improve its ability to identify data flows of interest. For example, when captured packets are decrypted and analyzed using network security tools and found to contain malware, found to be associated with a security breach, or otherwise violate security policies, this information may be provided to the machine learning model to further refine the machine learning model's identification of packets of interest.

Machine learning involves training algorithm based on a training set of network packet data that has already been identified as being as suspicious or not. Example algorithms include classification and regression algorithms, such as logistic regression or support vector machines. Clustering analysis may also be used, including supervised and unsupervised techniques like K-nearest neighbor and K-means clustering.

At step 904b, the packet capture manager 802 may flag the first data flow as a data flow of interest based on an instruction received from a network monitoring device. As non-limiting example, one of the network monitoring devices 818 may be an intrusion detection system. The IDS may have a ruleset used for identifying packets that contain malware or are otherwise associated with a security breach or network intrusion. An IDS ruleset match would trigger the IDS to make an API call instructing the packet capture manager 802 to move the first packet capture file from the primary storage 804 to secondary storage 806. The secondary storage may be long-term storage provided by a cloud-based storage service. The API call may include relevant metadata necessary to match the captured traffic from the IDS to the first network packet stored on in the primary storage 804. As described above, the API call may use a community ID.

In another non-limiting example, a Data Loss Prevention (DLP) device detects a traffic flow that violates DLP policy. The detected traffic flow triggers an API call instructing the packet capture manager 802 to move the first packet capture file from the primary storage 804 to secondary storage 806. The API call may include relevant metadata necessary to match the captured traffic from the DLP to the first packet capture file stored in the primary storage 804.

In yet another non-limiting example, a custom insider threat service is configured to track suspicious behavior of network users. The insider threat service detects that a network user's risk score is above a predefined threshold. The insider threat service makes an API call instructing the packet capture manager 802 to move network traffic corresponding to the high-risk user, including the first network packet capture file, from the primary storage 804 to secondary storage 806. The API call may include relevant metadata necessary to identify the network packets corresponding to the high-risk network user stored on in the primary storage 804.

At step 905, the packet capture manager 802 may move the first packet capture file from the primary storage 804 to secondary storage 806 based on the flagging of the first network data flow. According to some embodiments, the packet capture manager 802 may move packet capture files of interest to the secondary storage 806 in response to identification or flagging of the data flows as data flows of interest. According to some embodiments, the packet capture manager 802 may periodically move flagged packets to the secondary storage.

At step 906, the packet capture manager 802 may update the retention policy corresponding to the first packet capture file in response to the moving. Updating the retention policy may include changing the TTL of the packet capture file. Changing the TTL may include changing the TTL to an increased or indefinite amount of time. Updating the retention policy may further include changing a TTL of a decryption key associated with the first packet capture file to match the TTL of the first packet capture file. In this way, the decryption key required for decrypting the first data flow is retained together with the first packet capture file.

By moving the first packet capture file to the secondary storage 806 and updating the retention policy of the first network packet, the packet capture manager 802 identifies, isolates, and preserves network packets which are of interest to network performance management or network security management. These activities of the packet capture manager 802 allow the retention policy to focus on data flows of interest, rather than all captured packets.

At step 907, the packet capture manager 802 may instruct the device or module, such as a key broker, to delete a decryption key from the secure keystore 810 in response to expiration of a TTL of the first packet capture file or the second packet capture file. The deleted decryption key may be a decryption key associated with the data flows in the first packet capture file or the second packet capture file. Deleting unused decryption keys reduces storage costs associated with storing decryption keys. Because ephemeral keys are created for each TLS session, the number of ephemeral keys stored for a large network may be in the trillions. Deleting unused decryption keys from the key store frees space for the storage of decryption keys that may be used for analysis of other captured network traffic still being stored. Deleting unused decryption keys also reduces exposure of decryption keys to security threats and is part of the packet capture management that ensures storage space requirements do not become infeasible. Deleting unused decryption key aligns key management with PCAP retention ensuring that the decryption key storage time matches the storage time of corresponding PCAPs.

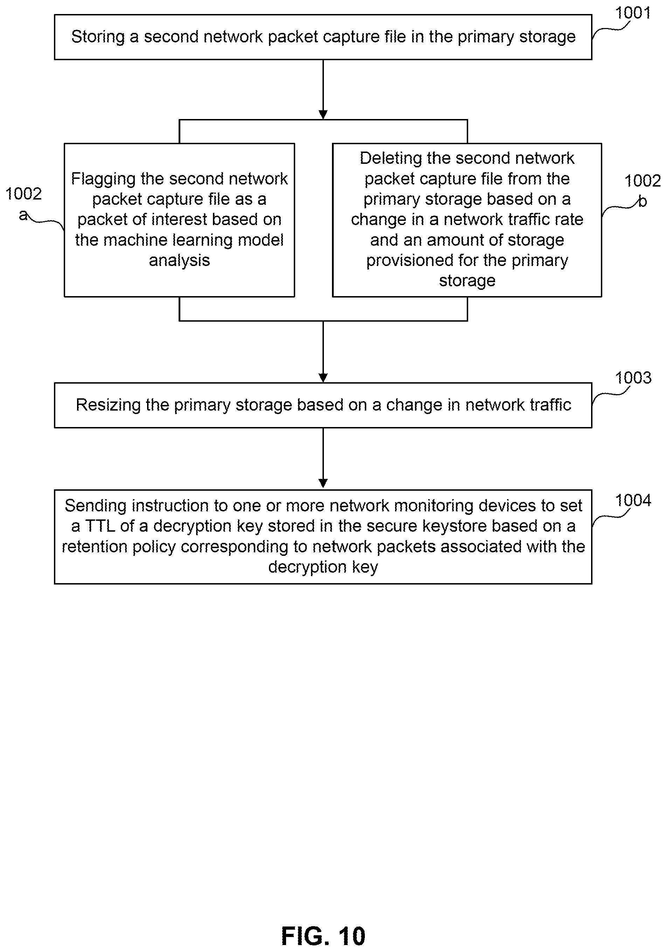

Fig. 10 is a flowchart illustrating a process of managing packet capture storage according to some disclosed embodiments.

At step 1001, the FPC 820 stores a second packet capture file in the primary storage 804. The second packet capture file may be associated with a TTL, which indicates how long the captured data flow should be stored based on the retention policy.

At step 1002a, the packet capture manager 802 may flag the second packet capture file as storing a data flow of interest based on the machine learning analysis. Alternatively, at step 1002b, the packet capture manager 802 may delete the second packet capture file from the primary storage 804 based on a change in a network traffic rate and an amount of storage provisioned for the primary storage 804. The packet capture manager 802 enables a more flexible retention policy to be applied to captured packets remaining in the primary storage. As a non-limiting example, according to some embodiments, captured packets in the primary storage 804 may be overwritten, as new network traffic is captured, without applying any particular TTL to the captured packets in the primary storage 804. This effectively creates a variable TTL that adjusts based on changes in traffic flow. Captured packets stored in the primary storage 804 may be overwritten or deleted in response to natural changes in traffic flows and the amount of storage provisioned for the primary storage 804.

At step 1003, the packet capture manager 802 may resize the primary storage 804 based on a change in the network traffic. According to some embodiments, a local primary storage 804 solution may be implemented in a cloud computing environment and configured to dynamically resize primary storage 804. Resizing primary storage 804 may be performed in response to observing network traffic and calculating how much network traffic needs to be ingested from existing and newly instantiated virtual machines in the cloud computing environment.

The packet capture manager 802 may respond to changes in the network traffic rate by resizing the primary storage 804. This allows a static retention policy with a static TTL to be applied to the captured packets stored in the primary storage 804. As the network traffic rate increases, in order to meet the requirements of a static retention policy, the packet capture manager 802 may increase the amount of storage allocated or provisioned from the primary storage 804. The packet capture manager 802 may monitor the network traffic rate through data or metadata received from one or more network packet brokers 816 deployed in the network infrastructure. The packet capture manager 802 may be configured to track network traffic levels from endpoints, servers, virtual machines or NPBs 816, in the context of the desired retention policy, and the amount of provisioned storage. As a non-limiting example, a packet capture manager 802 operating in a cloud computing environment may monitor network traffic levels in the cloud computing environment. When traffic levels rise or fall over a sufficient time window, the packet capture manager 802 may make API calls to the increase or decrease an elastic storage volume providing the primary storage 804.

As another non-limiting example, if TAPs 814 are capturing traffic from ten machines that are generating 500 Megabits (Mb) per second to a NPB 816, and the desired retention policy is one day, then 54 Terabytes (TB) of storage is required to ingest 5 Gigabits (Gb) per second for one day. If traffic on those 10 machines increases to 1Gb per second instead of 500Mb per second, the NPB 816 will receive a total of 10Gb per second and send 10Gb per second of traffic to the FPC device 820. In order to maintain a one day retention of captured traffic (PCAP) or to be in compliance with the Retention policy, the amount of storage provisioned for PCAP storage must be resized from 54TB to 108TB. The packet capture manager 802 is in a unique position to track changes in network traffic levels and respond to changes by increasing local storage to stay in compliance with the retention policy, decreasing the TTL in order to maintain a constant storage space, or decrease local storage to reduce operational costs. The retention policy may dictate which actions to perform under a variety of circumstances.

At step 1004, the packet capture manager 802 may send an instruction to one or more network monitoring devices 818, or another device such as a key broker, to set a TTL of a decryption key stored in the secure keystore 810 based on a retention policy corresponding to the network packet associated with the decryption key. According to some embodiments, an FPC device 820 solution may connect the retention policy with ephemeral key management. An FPC solution may store ephemeral keys corresponding to packets that are stored in primary storage 804 or secondary storage 806 and reduce unnecessary storage of ephemeral keys corresponding to packets that have been deleted based on the retention policy.

According to some embodiments, the packet capture manager 802 may intelligently instruct a manager of the secure keystore 810, such as a key broker, to set the TTL of an ephemeral key to match the current retention policy. The packet capture manager 802 may set the TTL of a decryption key in association with moving corresponding PCAPs from the primary storage 804 secondary storage 806. Setting the TTL may include changing an initial TTL to an increased or indefinite amount of time. The packet capture manager 802 may send the instruction to set the TTL of ephemeral keys via an API call. By setting the TTL of decryption keys, the packet capture manager 802 synchronizes the TTL of the decryption keys with the retention policy for captured packets associated with the decryption keys. In this way, the decryption keys required for decrypting the captured network packets are retained together with their associated captured network packets.

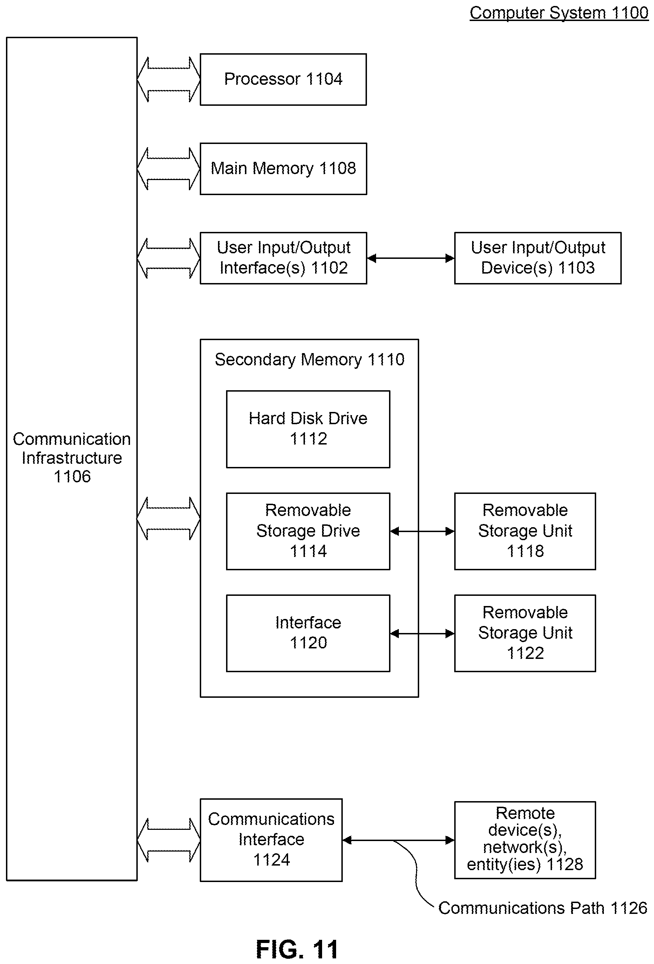

Fig. 11 is a block diagram of an example computer system useful for implementing various embodiments disclosed herein.

Various embodiments may be implemented, for example, using one or more well-known computer systems, such as computer system 1100 shown in FIG. 11. One or more computer systems 1100 may be used, for example, to implement any of the embodiments discussed herein, as well as combinations and sub-combinations thereof.

Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more of processors 1104 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache and/or registers. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114. Removable storage drive 1114 may be a floppy disk drive, a magnetic tape drive, a compact disk drive, an optical storage device, tape backup device, and/or any other storage device/drive.

Removable storage drive 1114 may interact with a removable storage unit 1118. Removable storage unit 1118 may include a computer usable or readable storage device having stored thereon computer software (control logic) and/or data. Removable storage unit 1118 may be a floppy disk, magnetic tape, compact disk, DVD, optical storage disk, and/ any other computer data storage device. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in Fig. 11. In particular, embodiments can operate with software, hardware, and/or operating system implementations other than those described herein.

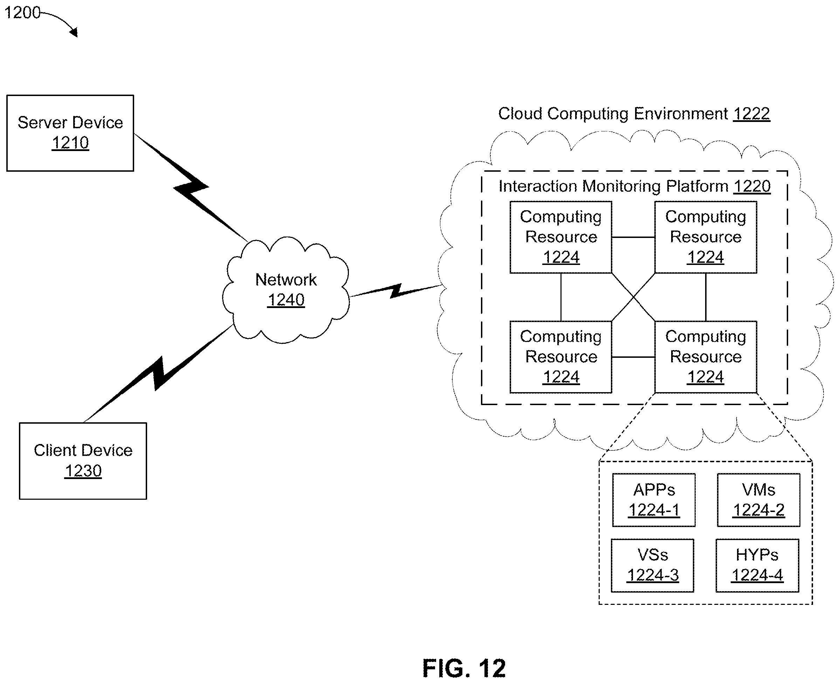

Fig. 12 is a diagram of a non-limiting example environment in which systems or methods described herein may be implemented.

As shown in Fig. 12, an environment 1200 may include a server device 1210, an interaction monitoring platform 1220, a client device 1230, and/or the like. Devices of environment 1200 may interconnect via wired connections, wireless connections, or a combination of wired and wireless connections.

Server device 1210 includes one or more devices capable of receiving, generating, storing, processing, and/or providing information associated with user interactions. For example, server device 1210 may include a server device (e.g., a host server, a web server, an application server, etc.), a data center device, or a similar device. In some implementations, server device 1210 may be capable of communicating with client device 1230 and/or interaction monitoring platform 1220, in a manner designed to facilitate collection of interaction data 804 and/or response data 806. For example, server device 1210 may receive, obtain and/or capture interaction data 804 and/or response data 806, may collect interaction data 804 and/or response data 806 for a historical period of time or in real time, and/or may send the interaction data 804 and/or response data 806 to interaction monitoring platform 1220. Server device 1210 may obtain current user interaction information in real-time and/or send the current user interaction information to interaction monitoring platform 1220 in real-time.

Interaction monitoring platform 1220 includes one or more devices that receive and/or process information (e.g., historical interaction data 804 and/or historical response data 806, current user interaction data 804, one or more touchpoints, and/or the like), generate information (e.g., a user sentiment, user interaction score of a user interaction, an association between the user interaction score and a touchpoint set, a ranking of one or more touchpoint sets of the user interaction, and/or the like), determine information (e.g a user interaction score of a user interaction, an association between the user interaction score and a touchpoint set, a ranking of one or more touchpoint sets of the user interaction, user sentiment, and/or the like) and/or generate an alert indicating that action needs to be taken. Interaction monitoring platform 1220 may perform, or cause to be performed, at least one action.

In some implementations, interaction monitoring platform 1220 can be designed to be modular such that certain software components can be swapped in or out depending on a particular need. As such, interaction monitoring platform 1220 can be easily and/or quickly reconfigured for different uses. In some implementations, interaction monitoring platform 1220 can receive information from and/or transmit information to server device 1210, client device 1230, and/or the like.

In some implementations, as shown, interaction monitoring platform 1220 can be hosted in a cloud computing environment 1222. Notably, while implementations described herein describe interaction monitoring platform 1220 as being hosted in cloud computing environment 1222, in some implementations, interaction monitoring platform 1220 may be implemented outside of a cloud computing environment or may be partially cloud-based.

Cloud computing environment 1222 includes an environment that hosts interaction monitoring platform 1220. Cloud computing environment 1222 can provide computation, software, data access, storage, etc. services that do not require end-user knowledge of a physical location and configuration of system(s) and/or device(s) that host interaction monitoring platform 1220. As shown, cloud computing environment 1222 can include a group of computing resources 1224 (referred to collectively as "computing resources 1224" and individually as "computing resource 1224").

Computing resource 1224 may include one or more personal computers, workstation computers, server devices, or other types of computation and/or communication devices. In some implementations, computing resource 1224 can host interaction monitoring platform 1220. The cloud resources can include compute instances executing in computing resource 1224, storage devices provided in computing resource 1224, data transfer devices provided by computing resource 1224, etc. In some implementations, computing resource 1224 can communicate with other computing resources 1224 via wired connections, wireless connections, or a combination of wired and wireless connections.

As further shown in Fig. 12, computing resource 1224 may include a group of cloud resources, such as one or more applications ("APPs") 1224-1, one or more virtual machines ("VMs") 1224-2, virtualized storage ("VSs") 1224-3, one or more hypervisors ("HYPs") 1224-4, and/or the like.

Application 1224-1 may include one or more software applications that can be provided to or accessed by client device 1230. Application 1224-1 can eliminate a need to install and execute the software applications on client device 1230. For example, application 1224-1 can include software associated with interaction monitoring platform 1220 and/or any other software capable of being provided via cloud computing environment 1222. In some implementations, one application 1224-1 can send/receive information to/from one or more other applications 1224-1, via virtual machine 1224-2.

Virtual machine 1224-2 includes a software implementation of a machine (e.g., a computer) that executes programs like a physical machine. Virtual machine 1224-2 can be either a system virtual machine or a process virtual machine, depending upon use and degree of correspondence to any real machine by virtual machine 1224-2. A system virtual machine can provide a complete system platform that supports execution of a complete operating system ("OS"). A process virtual machine can execute a single program, and can support a single process. In some implementations, virtual machine 1224-2 can execute on behalf of a user (e.g., client device 1230 or an operator of interaction monitoring platform 1220), and can manage infrastructure of cloud computing environment 1222, such as data management, synchronization, or long-duration data transfers.

Virtualized storage 1224-3 includes one or more storage systems and/or one or more devices that use virtualization techniques within the storage systems or devices of computing resource 1224. In some implementations, within the context of a storage system, types of virtualizations can include block virtualization and file virtualization. Block virtualization can refer to abstraction (or separation) of logical storage from physical storage so that the storage system can be accessed without regard to physical storage or heterogeneous structure. The separation can permit administrators of the storage system flexibility in how the administrators manage storage for end users. File virtualization can eliminate dependencies between data accessed at a file level and a location where files are physically stored. This can enable optimization of storage use, server consolidation, and/or performance of non-disruptive file migrations.

Hypervisor 1224-4 can provide hardware virtualization techniques that allow multiple operating systems (e.g., "guest operating systems") to execute concurrently on a host computer, such as computing resource 1224. Hypervisor 1224-4 can present a virtual operating platform to the guest operating systems, and can manage the execution of the guest operating systems. Multiple instances of a variety of operating systems can share virtualized hardware resources.

Client device 1230 includes one or more devices capable of receiving, generating, storing, processing, and/or providing information associated with user interaction. For example, client device 1230 can include a communication and/or computing device, such as a mobile phone (e.g., a smart phone, a radiotelephone, etc.), a laptop computer, a tablet computer, a handheld computer, a gaming device, a wearable communication device (e.g., a smart wristwatch, a pair of smart eyeglasses, etc.), or a similar type of device. Client device 1230 may receive and/or obtain an alert from interaction monitoring platform 1220. Client device may display the alert and/or perform, or cause to be performed, at least one action based on the alert.

Network 1240 includes one or more wired and/or wireless networks. For example, network 1240 can include a cellular network (e.g., a fifth generation (5G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or the like, and/or a combination of these or other types of networks.

The number and arrangement of devices and networks shown in Fig. 12 is provided as a non-limiting example. In practice, there may be additional devices and/or networks, fewer devices and/or networks, different devices and/or networks, or differently arranged devices and/or networks than those shown in Fig. 12. Furthermore, two or more devices shown in Fig. 12 may be implemented within a single device, or a single device shown in Fig. 12 may be implemented as multiple, distributed devices. Additionally, or alternatively, a set of devices (e.g., one or more devices) of environment 1200 may perform one or more functions described as being performed by another set of devices of environment 1200.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims.

## Claims

1. A system for managing distribution of digital security keys, the system comprising:
a network terminal access point (TAP) configured to intercept a packet on a computer network;
a network monitoring device (116, 118, 120 122) comprising a key datastore and configured to receive the intercepted packet and decrypt the intercepted packet when a corresponding decryption key (224) is stored in the key datastore;
a secure keystore configured to store decryption keys;
a key broker (202) configured to:
receive metadata (226) corresponding to the intercepted packet;
retrieve from the secure keystore, based on the metadata, the decryption key corresponding to the intercepted packet;
provide the decryption key to the network monitoring device for storage in the key datastore; and
wherein the key broker is further configured to remove the decryption key from the network monitoring device based on a decryption key storage limit of the network monitoring device and a priority of the decryption key.

2. The system of claim 1, further comprising:
an intrusion detection system (122) configured to:
collect the metadata, corresponding to packets to be decrypted, based on a server name indication (SNI) field retrieved from network traffic, or a common name (CN) field, or a subject alternative name (SAN) field of a security certificate retrieved from network traffic; and
send the metadata to the key broker; and
wherein the key broker is further configured to:
store the metadata in a tracking database (214).

3. The system of claim 1, wherein the key broker is further configured to store tracking data corresponding to both the network monitoring device and the decryption key provided to the network monitoring device.

4. The system of claim 1, wherein the key broker is further configured to store a lease time corresponding to the decryption key.

5. The system of claim 4, wherein the key broker is further configured to remove the decryption key from the network monitoring device in response to expiration of the lease time.

6. The system of claim 1, wherein the metadata comprises domain information or an unencrypted destination corresponding to the packet.

7. The system of claim 1, wherein the secure keystore comprises an offline storage device.

8. The system of claim 1, wherein the key broker is further configured to:
receive a request from the network monitoring device; and
provide the decryption key in response to the request.

9. A method of managing decryption keys in a network environment, the method comprising:
receiving, by a processor, metadata related to an encrypted network packet intercepted from network traffic;
retrieving, based on the metadata, a decryption key from a secure keystore;
providing the retrieved decryption key to a network monitoring device;
storing tracking data corresponding to both the network monitoring device and the decryption key provided to the network monitoring device;
updating the decryption key provided to the network monitoring device;
updating the tracking data in response to the updating of the decryption key; and
removing the decryption key from the network monitoring device based on a decryption key storage limit of the network monitoring device and a priority of the decryption key.

10. The method of claim 9, wherein the storing of the tracking data comprises storing an identifier of the decryption key and an identifier of the network monitoring device.

11. The method of claim 9, wherein the updating of the decryption key comprises updating the decryption key in response to a change in the network traffic.

12. The method of claim 9, wherein the storing of the tracking data comprises storing a lease time corresponding to the decryption key; and
wherein the updating of the decryption key comprises removing the decryption key from the network monitoring device in response to expiration of the lease time.

13. The method of claim 9, further comprising:
receiving a request, comprising the metadata, from the network monitoring device;
wherein the retrieving comprises retrieving, in response to the request, the decryption key from the secure keystore;
wherein the providing of the retrieved decryption key comprises storing the decryption key on a key datastore of the network monitoring device.

14. The method of claim 9, wherein the metadata comprises one or more of: domain information, an unencrypted portion of a network packet, or an identifier of a security certificate corresponding to the decryption key.

## Patentansprüche

1. System zur Verteilungsverwaltung von digitalen Sicherheitsschlüsseln, wobei das System umfasst:
einen Netzwerk-Terminal-Zugangspunkt (TAP), welcher dazu eingerichtet ist, ein Paket auf einem Computernetzwerk abzufangen;
eine Netzwerküberwachungsvorrichtung (116, 118, 120, 122), welche einen Schlüsseldatenspeicher umfasst und dazu eingerichtet ist, das abgefangene Paket zu erhalten und das abgefangene Paket zu entschlüsseln, wenn ein entsprechender Entschlüsselungsschlüssel (224) in dem Schlüsseldatenspeicher gespeichert ist;
einen sicheren Schlüsselspeicher, welcher dazu eingerichtet ist, Entschlüsselungsschlüssel zu speichern;
einen Schlüsselvermittler (202), welcher dazu eingerichtet ist:
Metadaten (226) zu erhalten, welche dem abgefangenen Paket entsprechen;
von dem sicheren Schlüsselspeicher, basierend auf den Metadaten, den Entschlüsselungsschlüssel abzurufen, welcher dem abgefangenen Paket entspricht;
den Entschlüsselungsschlüssel der Netzwerküberwachungsvorrichtung zum Speichern in dem Schlüsseldatenspeicher bereitzustellen; und
wobei der Schlüsselvermittler ferner dazu eingerichtet ist, den Entschlüsselungsschlüssel von der Netzwerküberwachungsvorrichtung zu entfernen, basierend auf einem Entschlüsselungsschlüsselspeicherlimit der Netzwerküberwachungsvorrichtung und einer Priorität des Entschlüsselungsschlüssels.

2. System nach Anspruch 1, ferner umfassend:
ein Eindringen-Detektionssystem (122), welches dazu eingerichtet ist:
die Metadaten zu sammeln, welche Paketen entsprechen, welche zu entschlüsseln sind, basierend auf einem Servernamenkennzeichnungs-(SNI)-feld, welches von dem Netzwerkverkehr abgerufen worden ist, oder auf einem Gemeinsamer-Namen-(CN)-Feld, oder auf einem Gegenstands-Alternativnamen-(SAN)-feld eines Sicherheitszertifikats, welches von dem Netzwerkverkehr abgerufen worden ist; und
die Metadaten an den Schlüsselvermittler zu senden; und
wobei der Schlüsselvermittler ferner dazu eingerichtet ist:
die Metadaten in einer Nachverfolgungsdatenbank (214) zu speichern.

3. System nach Anspruch 1, wobei der Schlüsselvermittler ferner dazu eingerichtet ist, Nachverfolgungsdaten zu speichern, welche sowohl der Netzwerküberwachungsvorrichtung und dem Entschlüsselungsschlüssel entsprechen, welcher der Netzwerküberwachungsvorrichtung bereitgestellt wird.

4. System nach Anspruch 1, wobei der Schlüsselvermittler ferner dazu eingerichtet ist, eine Leihdauer zu speichern, welche dem Entschlüsselungsschlüssel entspricht.

5. System nach Anspruch 4, wobei der Schlüsselvermittler ferner dazu eingerichtet ist, den Entschlüsselungsschlüssel von der Netzwerküberwachungsvorrichtung zu entfernen in Folge eines Ablaufens der Leihdauer.

6. System nach Anspruch 1, wobei die Metadaten Domäneninformationen oder ein unverschlüsseltes Ziel umfassen, welche dem Paket entsprechen.

7. System nach Anspruch 1, wobei der sichere Schlüsselspeicher eine Offline-Speichervorrichtung umfasst.

8. System nach Anspruch 1, wobei der Schlüsselvermittler ferner dazu eingerichtet ist:
eine Anfrage von der Netzwerküberwachungsvorrichtung zu erhalten; und
den Entschlüsselungsschlüssel in Folge der Anfrage bereitzustellen.

9. Verfahren zum Verwalten von Entschlüsselungsschlüsseln in einer Netzwerkumgebung, wobei das Verfahren umfasst:
Erhalten, durch einen Prozessor, von Metadaten, welche sich auf ein verschlüsseltes Netzwerkpaket beziehen, welches von einem Netzwerkverkehr abgefangen wird;
Abrufen, basierend auf den Metadaten, eines Entschlüsselungsschlüssels von einem sicheren Schlüsselspeicher;
Bereitstellen des abgerufenen Entschlüsselungsschlüssels an eine Netzwerküberwachungsvorrichtung;
Speichern von Nachverfolgungsdaten, welche sowohl der Netzwerküberwachungsvorrichtung als auch dem Entschlüsselungsschlüssel entsprechen, welcher der Netzwerküberwachungsvorrichtung bereitgestellt wird;
Aktualisieren des Entschlüsselungsschlüssels, welcher der Netzwerküberwachungsvorrichtung bereitgestellt wird;
Aktualisieren der Nachverfolgungsdaten in Folge des Aktualisierens des Entschlüsselungsschlüssels; und
Entfernen des Entschlüsselungsschlüssels von der
Netzwerküberwachungsvorrichtung basierend auf einem Entschlüsselungsschlüsselspeicherlimit der Netzwerküberwachungsvorrichtung und einer Priorität des Entschlüsselungsschlüssels.

10. Verfahren nach Anspruch 9, wobei das Speichern der Nachverfolgungsdaten ein Speichern einer Kennzeichnung des Entschlüsselungsschlüssels und einer Kennzeichnung der Netzwerküberwachungsvorrichtung umfasst.

11. Verfahren nach Anspruch 9, wobei das Aktualisieren des Entschlüsselungsschlüssels ein Aktualisieren des Entschlüsselungsschlüssels in Folge einer Änderung in dem Netzwerkverkehr umfasst.

12. Verfahren nach Anspruch 9, wobei das Speichern der Nachverfolgungsdaten ein Speichern einer Leihzeit umfasst, welche dem Entschlüsselungsschlüssel entspricht; und
wobei das Aktualisieren des Entschlüsselungsschlüssels ein Entfernen des Entschlüsselungsschlüssels von der Netzwerküberwachungsvorrichtung in Folge eines Ablaufens der Leihzeit umfasst.

13. Verfahren nach Anspruch 9, ferner umfassend:
Erhalten einer Anfrage, welche die Metadaten umfasst, von der Netzwerküberwachungsvorrichtung;
wobei das Abrufen ein Abrufen, in Folge der Anfrage, des Entschlüsselungsschlüssels von dem sicheren Schlüsselspeicher umfasst;
wobei das Bereitstellen des abgerufenen Entschlüsselungsschlüssels ein Speichern des Entschlüsselungsschlüssels auf einem Schlüsseldatenspeicher der Netzwerküberwachungsvorrichtung umfasst.

14. Verfahren nach Anspruch 9, wobei die Metadaten eines oder mehreres umfassen aus: Domäneninformationen, einem unverschlüsselten Teil eines Netzwerkpakets, oder einer Kennzeichnung eines Sicherheitszertifikats, welches dem Entschlüsselungsschlüssel entspricht.

## Revendications

1. Système pour gérer une distribution de clés de sécurité numériques, le système comprenant :
un point d'accès de terminal de réseau (TAP) configuré pour intercepter un paquet sur un réseau informatique ;
un dispositif de surveillance de réseau (116, 118, 120 122) comprenant une banque de données de clé et configuré pour recevoir le paquet intercepté et déchiffrer le paquet intercepté lorsqu'une clé de déchiffrement correspondante (224) est stockée dans la banque de données de clé ;
un magasin de clés sécurisé configuré pour stocker des clés de déchiffrement ;
un fournisseur de clé (202) configuré pour :
recevoir des métadonnées (226) correspondant au paquet intercepté ;
récupérer à partir du magasin de clés sécurisé, sur la base des métadonnées, la clé de déchiffrement correspondant au paquet intercepté ;
fournir la clé de déchiffrement au dispositif de surveillance de réseau pour un stockage dans la banque de données de clé ; et
dans lequel le fournisseur de clé est en outre configuré pour retirer la clé de déchiffrement à partir du dispositif de surveillance de réseau sur la base d'une limite de stockage de clé de déchiffrement du dispositif de surveillance de réseau et d'une priorité de la clé de déchiffrement.

2. Système selon la revendication 1, comprenant en outre :
un système de détection d'intrusion (122) configuré pour :
collecter les métadonnées, correspondant aux paquets à déchiffrer, sur la base d'un champ d'indication de nom de serveur (SNI) récupéré à partir d'un trafic de réseau, ou d'un champ de nom commun (CN), ou d'un champ de nom alternatif de sujet (SAN) d'un certificat de sécurité récupéré à partir du trafic de réseau ; et
envoyer les métadonnées au fournisseur de clé ; et
dans lequel le fournisseur de clé est en outre configuré pour :
stocker les métadonnées dans une base de données de suivi (214).

3. Système selon la revendication 1, dans lequel le fournisseur de clé est en outre configuré pour stocker des données de suivi correspondant à la fois au dispositif de surveillance de réseau et à la clé de déchiffrement fournie au dispositif de surveillance de réseau.

4. Système selon la revendication 1, dans lequel le fournisseur de clé est en outre configuré pour stocker un temps de location correspondant à la clé de déchiffrement.

5. Système selon la revendication 4, dans lequel le fournisseur de clé est en outre configuré pour retirer la clé de déchiffrement à partir du dispositif de surveillance de réseau en réponse à l'expiration du temps de location.

6. Système selon la revendication 1, dans lequel les métadonnées comprennent des informations de domaine ou une destination non chiffrée correspondant au paquet.

7. Système selon la revendication 1, dans lequel le magasin de clés sécurisé comprend un dispositif de stockage hors ligne.

8. Système selon la revendication 1, dans lequel le fournisseur de clé est en outre configuré pour :
recevoir une demande en provenance du dispositif de surveillance de réseau ; et
fournir la clé de déchiffrement en réponse à la demande.

9. Procédé de gestion de clés de déchiffrement dans un environnement de réseau, le procédé comprenant les étapes consistant à :
recevoir, par l'intermédiaire d'un processeur, des métadonnées relatives à un paquet de réseau chiffré intercepté à partir du trafic de réseau ;
récupérer, sur la base des métadonnées, une clé de déchiffrement à partir d'un magasin de clés sécurisé ;
fournir la clé de déchiffrement récupérée à un dispositif de surveillance de réseau ;
stocker des données de suivi correspondant à la fois au dispositif de surveillance du réseau et à la clé de déchiffrement fournie au dispositif de surveillance de réseau ;
mettre à jour la clé de déchiffrement fournie au dispositif de surveillance de réseau ;
mettre à jour les données de suivi en réponse à la mise à jour de la clé de déchiffrement ; et
retirer la clé de déchiffrement à partir du dispositif de surveillance de réseau sur la base d'une limite de stockage de clé de déchiffrement du dispositif de surveillance de réseau et d'une priorité de la clé de déchiffrement.

10. Procédé selon la revendication 9, dans lequel le stockage des données de suivi comprend un stockage d'un identifiant de la clé de déchiffrement et d'un identifiant du dispositif de surveillance de réseau.

11. Procédé selon la revendication 9, dans lequel la mise à jour de la clé de déchiffrement comprend une mise à jour de la clé de déchiffrement en réponse à un changement dans le trafic de réseau.

12. Procédé selon la revendication 9, dans lequel le stockage des données de suivi comprend un stockage d'un temps de location correspondant à la clé de déchiffrement ; et
dans lequel la mise à jour de la clé de déchiffrement comprend un retrait de la clé de déchiffrement à partir du dispositif de surveillance de réseau en réponse à l'expiration du temps de location.

13. Procédé selon la revendication 9, comprenant en outre l'étape consistant à :
recevoir une demande, comprenant les métadonnées, à partir du dispositif de surveillance de réseau ;
dans lequel la récupération comprend une récupération, en réponse à la demande, de la clé de déchiffrement à partir du magasin de clés sécurisé ;
dans lequel la fourniture de la clé de déchiffrement récupérée comprend un stockage de la clé de déchiffrement sur une banque de données de clé du dispositif de surveillance de réseau.

14. Procédé selon la revendication 9, dans lequel les métadonnées comprennent un ou plusieurs parmi :
des informations de domaine, une partie non chiffrée d'un paquet de réseau, ou un identifiant d'un certificat de sécurité correspondant à la clé de déchiffrement.
